(19)

**Europäisches Patentamt**
**European Patent Office**
**Office européen des brevets**

(11) **EP 2 513 664 B1**

(12) **FASCICULE DE BREVET EUROPEEN**

(45) Date de publication et mention
de la délivrance du brevet:
**01.04.2015 Bulletin 2015/14**

(21) Numéro de dépôt: **10792894.7**

(22) Date de dépôt: **13.12.2010**

(51) Int Cl.:
***G01S 5/16*** *(2006.01)*   ***G01S 11/12*** *(2006.01)*

(86) Numéro de dépôt international:
**PCT/EP2010/069533**

(87) Numéro de publication internationale:
**WO 2011/073144 (23.06.2011 Gazette 2011/25)**

(54) **PROCEDE DE CALIBRAGE D'UN INSTRUMENT DE MESURE D'UN SYSTEME OPTRONIQUE**

VERFAHREN ZUR KALIBRIERUNG EINES MESSINSTRUMENTS EINES OPTRONISCHEN
SYSTEMS

METHOD FOR CALIBRATING A MEASUREMENT INSTRUMENT OF AN OPTRONIC SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.12.2009 FR 0906173**

(43) Date de publication de la demande:
**24.10.2012 Bulletin 2012/43**

(73) Titulaire: **Thales**
**92200 Neuilly Sur Seine (FR)**

(72) Inventeur: **SIMON, Alain**
**F-78490 Les Mesnuls (FR)**

(74) Mandataire: **Henriot, Marie-Pierre et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**WO-A1-2005/114567     US-A- 6 101 455**
**US-A1- 2008 109 182**

**Description**

Le domaine de l'invention est celui du calibrage d'un système optronique en mouvement et en visualisation d'un point fixe au bénéfice de sa localisation ou de son pointage. Ce système est équipé d'instruments de mesure permettant d'effectuer des mesures d'angles et/ou de distances du point fixe visé. L'invention concerne plus précisément le calibrage de ces instruments de mesure installés dans le système.

On peut citer à titre d'exemples de ces instruments de mesure, des systèmes pour la navigation de la plate-forme, des capteurs pour la détection et l'analyse de scène et, pour certains, des armes pour dissuader ou agresser des cibles dans les missions de sécurité ou de combat.

- Le système de navigation utilise traditionnellement pour son positionnement, une centrale inertielle comprenant des gyromètres, des accéléromètres et des traitements pour le calcul d'attitude de la plate-forme ; un GPS ainsi qu'un baromètre contribuent aussi à son positionnement et leurs mesures sont fusionnées aux mesures inertielles, pour une meilleure qualité de la solution générale de navigation.
- Les systèmes de détection et d'analyse de scène comprennent des capteurs optroniques avec des détecteurs fonctionnant du domaine visible à l'infrarouge pour acquérir une vidéo de la scène, un télémètre pour mesurer la distance à celle-ci. La ligne de visée (ou LdV) du capteur dispose d'une capacité à s'orienter agilement afin d'acquérir rapidement une zone de la scène correspondant au champ de vision instantané du capteur. Des unités de mesures inertielles ou d'autres dispositifs opto-mécaniques sont encore utilisés pour mesurer l'attitude de la LdV par rapport à une référence du capteur ou de manière absolue.
- Les systèmes d'armes comprennent des moyens inertiels et de positionnement pour le guidage des munitions vers leurs objectifs. Ils peuvent par ailleurs utiliser des auto-directeurs à imagerie optronique ou radar pour corriger leur guidage terminal sur les cibles désignées.

Dans les procédures classiques de calibrage, on dit que les instruments ou équipements doivent être alignés sur le système de référence de la plate-forme et que leurs positionnements respectifs doivent être "harmonisés".

Ce système optronique est généralement installé sur une plate-forme à bord d'un aéronef ou plus généralement à bord d'un véhicule dont la position connue est par exemple fournie par une centrale inertielle.

La détermination des défauts de montage du système sur la plate-forme et des défauts des mesures effectuées par l'instrument est une étape préalable à toute procédure de localisation ou de pointage, en particulier lorsqu'elle fait intervenir des instruments de mesures répartis sur le système.

Les défauts de montage se traduisent par un non alignement des axes de référence du repère de la plate-forme sur ceux du repère de l'instrument de mesure. L'opération de mesure des angles qualifiant la transformation entre repères est une procédure désignée sous le vocable d'harmonisation, lorsqu'il s'agit d'orienter les instruments de mesures entre-eux ; ou d'alignement lorsqu'il s'agit de les orienter (ou positionner) relativement au repère de référence du système (boresight alignement).

Outre les erreurs d'orientation liée aux axes de référence des mesures d'angles (en particulier matérialisés par les axes de gyromètres dans les système inertiels), le montage d'un capteur sur une plate-forme de type aéroportée introduit des écarts d'orientation entre les axes de référence de la plate-forme et du capteur pouvant atteindre plusieurs degrés. La valeur courante des erreurs sur la connaissance des angles de montage est de l'ordre de 10 mrad.

Ces erreurs trouvent leur origine dans la réalisation de différents composants comme le quartz qui cadence les horloges, les accéléromètres qui mesurent les accélérations et matérialisent les directions d'axes autour desquels des gyromètres mesurent des vitesses angulaires.

L'attitude du système est typiquement entachée d'une erreur d'environ 1 mrad lorsque l'information provient d'une centrale inertielle de classe aéronautique.

Les instruments de mesures d'angles et/ou de distances introduisent couramment un biais de quelques milli-radians.

En cours de fonctionnement, la plate-forme et les axes de référence peuvent subir des déformations mécaniques et thermiques en particulier provoquées respectivement par une forte accélération ou décélération et par la variation de la hauteur de vol. Ces contraintes thermomécaniques induisent sur les mesures un biais pouvant atteindre quelques mrad.

Parmi les défauts de mesure, on peut citer notamment les bruits, les biais, les facteurs d'échelle et les dérives. Le facteur d'échelle se traduit par un écart de la grandeur mesurée par rapport à la valeur vraie dont la valeur est proportionnelle à la valeur de la grandeur. Son ordre de grandeur est de quelques 10 partie par million (ppm en abrégé). La dérive se traduit par un écart à la grandeur qui grandit au cours du temps depuis une date à laquelle celle-ci a été corrigée. On parle de dérive lente si l'accroissement est faible en regard de la valeur. Lorsque la plage temporelle des mesures est assez faible pour que l'écart de dérive ne soit pas dimensionnant, celle-ci peut être traitée comme un biais additionnel sur l'intervalle de temps considéré.

Pour les mesures d'angles les valeurs spécifiques de montage peuvent être de l'ordre d'une dizaine de degrés alors que le cumul des défauts conduit à des erreurs résiduelles d'environ 10 mrad. Les translations entre les repères de la plate-forme traduisent des écarts pouvant atteindre quelques mètres avec des erreurs résiduelles qui sont maîtrisées pour atteindre quelques centimètres.

Les paramètres que nous proposons d'estimer concernent aussi bien le défaut d'une mesure d'un appareil relevant des informations en ligne que le montage de l'équipement sur la plate-forme.

Il existe plusieurs méthodes de calibrage avec des variations inhérentes au domaine d'application.

Dans le domaine de la métrologie, la mesure est nécessaire à toute connaissance, à toute prise de décision et à toute action. La caractérisation des défauts des instruments de mesure s'inscrit comme une étape systématique dans la production des instruments ou capteurs élémentaires intégrés au sein des systèmes ou capteurs complexes. Cette caractérisation se traduit de manière classique par l'estimation de propriétés (biais, facteur d'échelle, ...) des grandeurs physiques (angle, distance, ...), caractérisées par leurs valeurs statistiques (moyenne, écart-type, ...) sur le domaine d'utilisation du système.

Les opérations de métrologie sont généralement effectuées au sol sur des bancs d'essai et de manière très précise mais dans des conditions particulières de mesure qui ne peuvent pas toujours refléter les conditions réelles d'utilisation. Ces procédures de calibrage sont chères, laborieuses, difficiles à réaliser par manque de place au sein des équipements ; de plus la réalisation au sol des conditions d'acquisition (distance, température, contrainte mécanique) et de modélisation reste limitée par la connaissance des phénomènes.

Pour déterminer l'alignement au sol, les opérations de métrologie sont longues et consommatrices de moyens spécifiques. Elles doivent de plus être potentiellement répétées ce qui les rend très coûteuses et inadaptées à une utilisation rapide et pratique des instruments sur des plates-formes mobiles.

De plus, les instruments de mesures sont assujettis à des phénomènes de dérive temporelle et des vieillissements susceptibles de modifier leur biais. Ceci suppose une stratégie de maintien en condition opérationnelle (MCO), avec des plannings de reprise de test et de calibrage.

Dans le domaine de l'industrie, et pour les applications robotiques, des moyens sont couramment mis en oeuvre pour réaliser le calibrage de pose (position et orientation) de pièces ou parties mécaniques relatives à une structure fixe ou mobile comme décrit dans l'article de P. Renaud et co-auteurs "Optimal pose selection for vision-based kinematic calibration of parallel mechanisms", Proceedings of the 2003 IEE/RSJ. Conference on Intelligent Robots and Systems. Las Vegas. Nevada. Oct. 2003.

Ces opérations consistent traditionnellement à estimer la position et l'orientation de la pièce ou de la partie mécanique relativement à une structure fixe ou mobile sur la base d'un modèle. Un exemple de dispositif et de procédé de mesure d'un objet tri-dimensionnel est décrit dans le document WO 2005/114567.

L'information mesurée est de grande précision mais souvent relative. Pour notre application, une méthode permettant d'évaluer directement l'orientation globale est suffisante et on recherche une information absolue.

De plus le calibrage des systèmes qui nous concernent présentent souvent un nombre important de joints ou de cardans (voir par exemple les figures 10, 15, 16, 17 dans "Air Reconnaissance Primary Imagery Data Standard" Edition 4 du 14/03/2006.

Dans le milieu médical, en relation avec la robotique et la réalité augmentée, des moyens se développent pour l'assistance à des opérations délicates nécessitant une exactitude de positionnement dans les interventions chirurgicales comme décrit par exemple dans T. Sielhorst T et co-auteurs "Advanced Medical Displays- A Literature Review of Augmented Reality", J. of Display technology, Vol 4 N°4 dec. 2008

Les solutions apportées pour le domaine médical ne sont pas reproductibles en milieu dynamique et non coopérant. Dans ces applications, la connaissance du milieu permet par exemple de prédisposer des marqueurs ou d'apprendre certaines caractéristiques de l'environnement pour positionner et orienter les équipements utilisés. De plus l'information produite est souvent relative alors que pour l'application de localisation ou de pointage, on recherche une information absolue.

En médecine, comme pour les autres applications évoquées, les processus ne sont pas autonomes car ils sont basés sur des données de référence (considérées comme exactes) sur l'environnement, ou sur des échanges d'informations sous forme de coopération entre systèmes répartis ou sur une intervention spécifique de l'utilisateur.

Pour positionner un objet par triangulation en présence de biais, certains auteurs comme Mangel dans "Three bearing method for passive triangulation in systems with unknown deterministic biases", IEEE TAES Vol 7 N°6 Nov. 1981, ont privilégié des méthodes susceptibles de fournir une solution qui ne soit pas trop perturbée par leur présence. Mais ces approches n'apportent pas une connaissance plus fine du système de façon à mieux l'exploiter dans des conditions nouvelles.

Dans le domaine du positionnement et de la navigation, des travaux assez récents cherchent à corriger les défauts de mesure par utilisation de redondances physiques (duplication des instruments de mesure) ou logicielle. Ces approches concernent essentiellement les systèmes de positionnement GPS et d'orientation (INS), telles que décrites par Pittelkau dans "Calibration and Attitude Determination with Redundant Inertial Measurement Units", J. of Guidance Control and Dynamics. Vol. 28, No. 4, July-August 2005.

Mais l'utilisation de redondances physiques présente des coûts récurrents et nécessite de reprendre les architectures existantes. Des problèmes d'encombrement et de place disponible au sein des équipements sont aussi à prendre en compte. Enfin elles ne permettent pas de mesurer les alignements sur l'ensemble des cardans utiles pour le système.

Dans le domaine militaire, la fusion de données entraîne des besoins spécifiques et en particulier avec le besoin d'association de données diverses :

- Pour le pistage multi-capteurs, des travaux académiques se sont intéressés au calage d'antennes de radar de veille sur le Nord Géographique afin d'améliorer le pistage d'aéronefs par plusieurs radars à l'échelle d'un pays voire d'un continent. Dans ce cadre, on peut citer les travaux réalisés par :

  ○ Li et co-auteurs "A real-time bias registration algorithm for multiradar systems", 7th International Conférence on Signal Processing (IEEE) 2004 , ou encore,
  ○ Dong et co-auteurs "A generalized least squares registration algorithm with Earth-centered Earth-fixed (ECEF) coordinate system", 3d International Conférence on Computational Electromagnetics and Its Applications Proceedings 2004,

- Pour la localisation en présence de biais angulaire, l'opération de calibrage (ou de simbleautage) consiste à réaliser un réglage qui permet d'aligner la Ligne de Visée (ou "LdV") sur l'axe de visée du système optronique installé sur une plate-forme.
- Pour l'échange d'informations entre capteurs répartis, la nécessité d'interopérabilité favorise le développement de normalisation, dans les domaines du positionnement et de la fusion entre sources hétérogènes. Le STANAG 5516 acronyme de l'expression anglo-saxonne « STANdard AGreement », réserve des champs spécifiques (désignés par PPLI pour Precise Participant Location and Identification) afin de permettre l'échange des positions connues entre les participants du réseau pour le calibrage coopératif.

Pour les applications utilisant des instruments de mesure coopérants, la fusion de données offre des avantages en termes d'autonomie et d'indépendance à l'environnement. Elles posent en revanche des contraintes concernant le nombre et la répartition des instruments de mesure et nécessitent des moyens de communication et d'échange d'informations vers ces instruments, ainsi qu'une identification d'objets communs sur lesquels portent les informations à rapprocher. Cette situation ne correspond pas à l'utilisation souhaitée.

Les instruments de mesure aéroportés évoluent dans des conditions thermomécaniques assez différentes de ce qui peut généralement être reproduit au sol dans des conditions réalistes avec toute la diversité rencontrée dans leur domaine de fonctionnement.

Quel que soit le domaine d'application, ces instruments de localisation nécessitent un contrôle systématique et périodique afin de gérer leur dérive temporelle et leur vieillissement.

Les procédures de calibrage sont chères, laborieuses, difficiles à réaliser par manque de place au sein des équipements ; il est également difficile de réaliser au sol les conditions d'acquisition (distance, température, contrainte mécanique) et d'une modélisation réaliste qui reste limitée par la connaissance des phénomènes.

Le but de l'invention est de remédier à ces inconvénients. Plus précisément, il s'agit de réduire le coût du calibrage et de sa maintenance, tout en améliorant sa précision et sa stabilité pour des applications où l'on cherche à améliorer de manière autonome et permanente :

- la localisation d'objets non-coopérants à partir de mesures passives et/ou de mesures de distance
- le pointage du capteur à partir de mesures d'angles.

L'invention a pour objet un procédé de calibrage d'instruments de mesure d'un système optronique en mouvement, de positions $P_1$, $P_2$, ..., $P_i$, ..., ce système optronique comprenant :

- un dispositif d'acquisition d'images d'une scène comprenant un objet fixe $G_0$ et,
- des moyens de poursuite de l'objet fixe $G_0$ au cours de l'acquisition de ces images,
- des moyens d'obtention des positions $P_1$, $P_2$, ...
- au moins un instrument de mesure de la distance et/ou un instrument de mesure d'angles d'orientation et/ou d'attitude entre cet instrument de mesure et l'objet fixe G0, selon une Ligne de Visée (LdV),

Il est principalement caractérisé en ce qu'il comprend les étapes suivantes :

- acquisition à des instants $t_1$, $t_2$, ... d'au moins deux images, chaque image étant acquise à partir de positions

différentes $P_1$, $P_2$, ... du système, l'objet fixe $G_0$ étant visé dans chaque image, mais sa position étant inconnue,
- acquisition aux instants $t'_1$, $t'_2$, ... de mesures de distance et/ou d'angle,
- synchronisation des mesures de distance et/ou d'angle avec les positions $P_1$, $P_2$, ... établies à des instants $t_1$, $t_2$, ...,
- estimation des défauts de mesure qui minimisent la dispersion d'au moins deux points d'intersection Gij entre la LdV à la position $P_i$ et la LdV à la position $P_j$, en fonction desdites mesures et des positions connues $P_i$, $P_j$ du système.

Ce procédé permet de réaliser un calibrage autonome (sans recourir à une information ou action externe), in-situ (dans les conditions opérationnelles de fonctionnement), ou dans le milieu des opérations, en évaluant les valeurs obtenues dans les conditions d'utilisation, ce qui représente un avantage pour le besoin de calibrage de systèmes optroniques aéroportés.

En regard des applications de métrologie au sol ou de calibrage coopératif en réseau, l'approche proposée a pour originalité d'opérer à partir d'un instrument de mesure unique, de manière automatique et autonome, sans requérir d'intervention humaine ni de connaissances exactes sur le contexte d'acquisition.

Selon une caractéristique de l'invention, le seul instrument de mesure calibré est un instrument de mesure d'angles d'orientation et/ou d'attitude ; les mesures sont alors acquises à partir d'au moins trois positions P1, P2, P3 différentes.

Selon une autre caractéristique de l'invention, le seul instrument de mesure calibré est un télémètre, et les mesures sont acquises à partir d'au moins deux positions différentes.

Lorsqu'au moins un autre objet fixe $G_1$ est visible sur au moins deux images, il comprend éventuellement en outre une étape de mise en correspondance entre chaque image des objets fixes $G_0$, $G_1$, l'étape de calcul des défauts de mesure étant en outre réalisée en fonction de caractéristiques ou paramètres prédéterminés internes au capteur (comme la taille et les dimensions des éléments de la matrice photo-sensible, la distance focale, le Point Principal Image, la distorsion optique). Notons qu'avec suffisamment de mesures disponibles, ces grandeurs peuvent aussi être estimées en linéarisant les équations de prise de vue du capteur autour des valeurs approchées. Par ailleurs certains de ces paramètres, comme la focale et la distorsion, fluctuent plus particulièrement avec la température.

De préférence, il comprend une étape de calcul de la position géographique de $G_0$ et éventuellement des autres objets fixes, à partir des mesures calibrées.

Selon une variante, il comprend une étape de pointage de l'objet fixe $G_0$.

Selon une caractéristique de l'invention, il comprend une étape d'optimisation des conditions de mesure basée sur la détermination d'une trajectoire optimale du capteur pour une position connue de l'objet $G_0$, ou sur la détermination d'une zone à privilégier pour la recherche de l'objet $G_0$.

Selon une autre caractéristique de l'invention, il comprend une étape consistant à appliquer les défauts calculés aux mesures.

Ce procédé présente de nombreux avantages puisqu'il améliore:

- les performances de géo-référencement direct de l'image ce qui permet une meilleure localisation de tous ses points,
- le pointage absolu de la LdV ce qui permet en particulier de placer un objet de coordonnées connues au plus proche du centre d'une image et par là même réduire les délais pour son acquisition et son analyse.

En outre :

- il est autonome, ne nécessitant ni intervention ou surveillance de l'opérateur, ni données de référence sur l'environnement,
- il fonctionne dans un mode courant d'utilisation des instruments de mesure,
- il ne requiert pas de trajectoire complexe de la plate-forme pour disposer de performances exploitables,
- il relâche significativement les exigences sur la précision de pointage de la LdV qui doivent être allouées lors de la spécification du système,
- il allège le besoin métrologique visant la qualification du simbleautage au sol et évite ainsi des procédures au sol difficiles car longues et devant être répétées, et coûteuses.

L'invention a aussi pour objet un système optronique apte à être déplacé, qui comprend :

- un dispositif d'acquisition d'images d'une scène comprenant un objet fixe $G_0$,
- des moyens de poursuite de l'objet fixe $G_0$ au cours de l'acquisition de ces images,
- des moyens d'obtention des positions $P_1$, $P_2$, ...
- au moins un instrument de mesure de la distance et/ou un instrument de mesure d'angles d'orientation et/ou d'attitude entre cet instrument de mesure et l'objet fixe $G_0$, selon une ligne de visée.

Il est caractérisé en ce qu'il comprend des moyens de mise en oeuvre du procédé tel que décrit précédemment.

Les procédures de calibrage et d'alignement correspondent au vocable anglo-saxon de « registration » dans certains domaines. Dans le monde du traitement des images, on parle couramment de "registration d'images", qui correspond à l'action permettant de superposer les contenus de plusieurs images par exemple.

D'autres caractéristiques et avantages de l'invention apparaîtront à la lecture de la description détaillée qui suit, faite à titre d'exemple non limitatif et en référence aux dessins annexés dans lesquels :

la figure 1 illustre schématiquement la dispersion de positions erronées obtenues à partir de quatre positions différentes,
la figure 2 représente schématiquement un exemple de système optronique équipé de moyens de calibrage d'un instrument de mesure,
la figure 3 représente schématiquement les axes du repère du système et ceux du repère de l'instrument de mesure,
la figure 4 représente schématiquement une configuration simple de mesures pour un processus de calibrage (A(L)RFM ) de défaut de mesure angle et distance de nature biais et facteur d'échelle,
la figure 5 représente un schéma des mesures relevées pour alimenter le procédé selon l'invention,
la figure 6 schématise les transformations pour passer d'un repère à l'autre,
les figures 7 présentent un schéma des conditions d'acquisition permettant la localisation et le calibrage passifs simultanés en utilisant le mouvement et en procédant soit uniquement avec des mesures passives (fig 7a), soit en ajoutant des mesures de distances ou actives (fig 7b).

D'une figure à l'autre, les mêmes éléments sont repérés par les mêmes références.

Le système optronique d'intérêt comprend :

- une plate-forme permettant de réaliser le déplacement du système, la mesure de son positionnement et le montage du capteur optronique,
- un capteur optronique constituant l'instrument permettant d'imager et viser un point fixe du sol $G_0$ sur lequel sont réalisées des mesures d'angles et/ou de distances.

Dans la suite on prendra comme exemple un système installé à bord d'un aéronef, mais il pourrait tout aussi bien être installé dans un robot ou une plate-forme terrestre voire être directement porté par un utilisateur. Le terme "plate-forme" est donc utilisé dans sa forme la plus générique.

Le procédé selon l'invention repose sur :

- le déplacement du système optronique au cours du temps ;
- les moyens pour acquérir un point d'intérêt (ou objet) fixe $G_0$ ;

Les moyens d'acquisition d'un point fixe couvrent la détermination d'une zone adéquate de la scène, le choix d'un objet pertinent et sa poursuite temporelle. Cette poursuite peut être manuelle ou automatique. La capacité de poursuite automatique de l'objet consiste à entretenir son maintien au centre de l'image lors du déplacement du système au cours du temps (c'est-à-dire au fil de la séquence d'images acquise par le capteur). Ceci est réalisé en mesurant son déplacement apparent (écartométrie) entre une image de référence et l'image courante. Pour que cette mesure de déplacement soit possible, il est nécessaire que l'objet ait été auparavant "accroché", c'est-à-dire détecté et localisé dans l'image. L'accrochage permet l'initialisation automatique de la poursuite.

- des moyens d'acquisition d'images successives d'une zone comportant ce point fixe $G_0$,
- la mesure d'angles et/ou de distances entre l'instrument de mesure et l'objet visé $G_0$ ;
- la connaissance des coordonnées absolues des positions Pi du système aux instants de mesure ;
- un traitement des mesures successives pour permettre d'estimer les meilleures valeurs de défaut rendant compte de l'immobilité du point visé G0.
- une faible variation des paramètres à calibrer à l'échelle de la durée de recueil des mesures utiles à leur estimation.
- des moyens de mesure des grandeurs thermodynamiques sur les composants de mesure les plus sensibles (température par exemple) afin de permettre une analyse temporelle du comportement selon différentes conditions de fonctionnement et prévoir lors de l'utilisation les valeurs a priori des paramètres à estimer d'après les valeurs apprises des procédures précédentes de calibrage.

Lorsque le système est considéré en "mode poursuite" sur un objet de la scène ceci signifie que sa position (ou ses coordonnées pixel) dans l'image est maintenue constante au cours des acquisitions. Dans le cas le plus fréquent, le mode poursuite permet de maintenir lors du déplacement l'objet $G_0$ au centre des images de la séquence constituant la vidéo optronique. Le cas moins fréquent d'une poursuite sur l'objet fixe imagée hors du centre image permet aussi de réaliser le processus.

Les mesures qualifient les paramètres de prise de vue du dispositif d'acquisition des images.

La méthode proposée soumet les positions $G_{ij}$ obtenues par l'ensemble des mesures acquises au cours du temps, à la contrainte de positionner un point fixe $G_0$ pour les différentes positions $P_1$, $P_2$, ..., du système optronique.

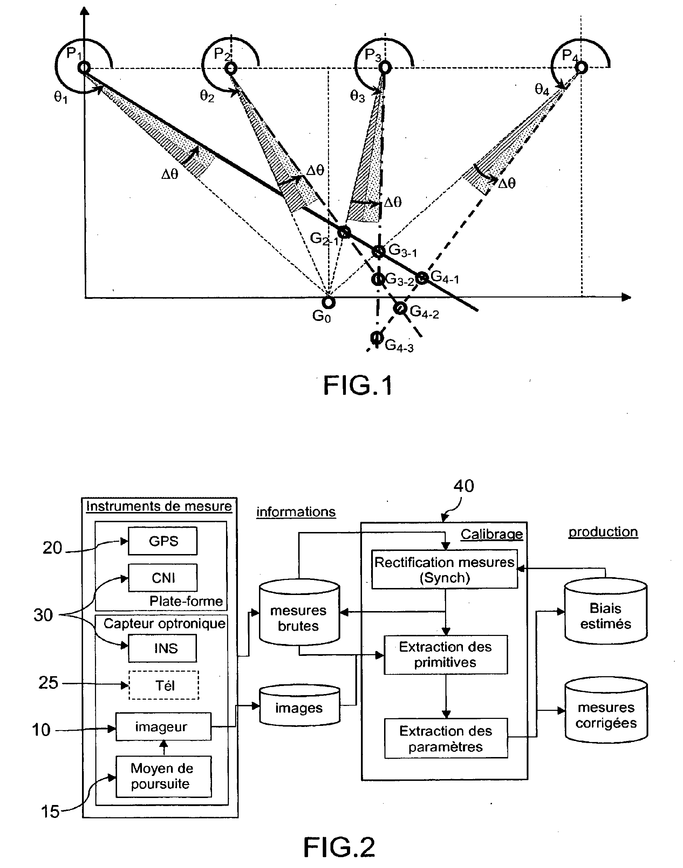

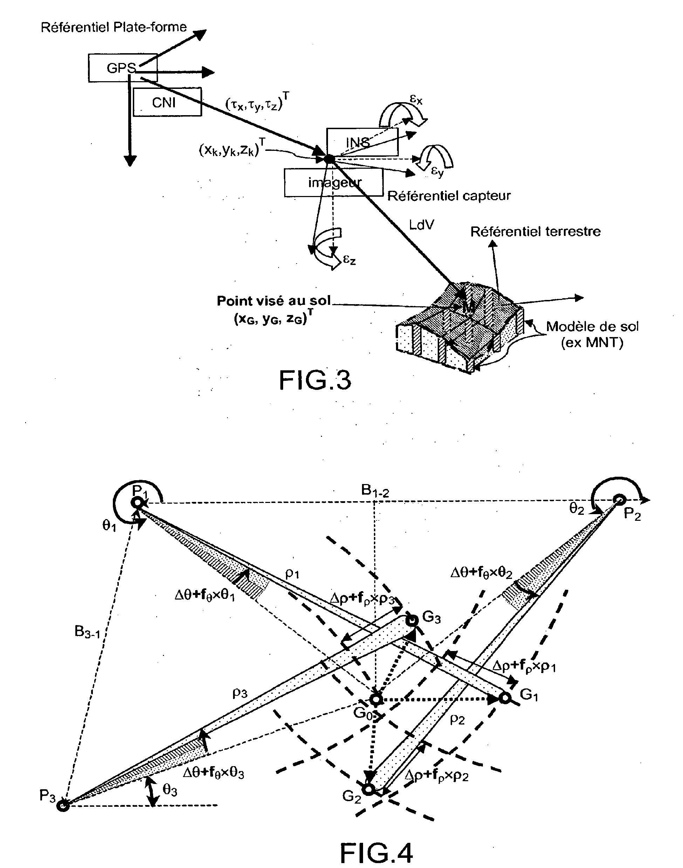

Les défauts de montage ou/et de mesure des instruments produisent de fait des solutions de position pour l'objet fixe $G_0$, différentes entre elles ainsi que de la réalité. A chaque position $P_i$ du système sont associées les mesures prises en ces positions : ceci est désigné jeu de mesure. Les N jeux de mesures (position du système, angle et/ou distance) fournissent N positions qui du fait des erreurs de mesures ne coïncident pas en un point unique mais présentent une dispersion. La dispersion entre les mesures constitue une signature des défauts pour des conditions données de prise de vue (trajectoire du système, angles considérés, condition thermodynamique de fonctionnement). Ceci est illustré figure 1 avec des mesures d'angles autour d'une seule direction ; sont représentées sur cette figure quatre positions connues $P_1$, $P_2$, $P_3$, $P_4$ de la plate-forme, ainsi que la position réelle $G_0$ de l'objet fixe. Le défaut de mesure introduit une erreur $\Delta\theta$ sur la LdV de l'instrument de mesure, $\theta$ étant l'angle de rotation dans le plan comme illustré figure 3. Si les LdV étaient parfaitement alignées, elles se croiseraient toutes en $G_0$. En fait, elles se croisent en plusieurs points dispersés. La LdV issue de $P_1$ se croise en $G_{12}$ avec la LdV issue de $P_2$, en $G_{13}$ avec la LdV issue de $P_3$, en $G_{14}$ avec la LdV issue de $P_4$. De même, la LdV issue de $P_2$ se croise en $G_{23}$ avec la LdV issue de P3, en $G_{24}$ avec la LdV issue de $P_4$. Enfin, la LdV issue de $P_3$ se croise en $G_{34}$ avec la LdV issue de $P_4$. A partir de N mesures (un jeu de mesures par position P) on peut ainsi construire N(N-1)/2 positions dont la répartition signe les défauts de mesure $\Delta\theta$ comme illustré dans l'exemple ci-dessus pour une dimension.

En généralisant à trois dimensions, on considère en plus des deux angles caractérisant la direction de pointage de la LdV l'angle de rotation de l'image autour de celle-ci. La mécanisation (assemblage) des différents capteurs sur la plate-forme conduit à considérer différents repères, dont les axes et origines sont répartis au sein du système, comme notamment :

-    l'antenne du récepteur du GPS,
-    la centrale de navigation inertielle (CNI) de la plate-forme,
-    le point principal image (PPI) ou centre optique de l'imageur.

Le passage de chacun de ces repères vers les autres est décrit par une transformation de type (Translation et Rotation).

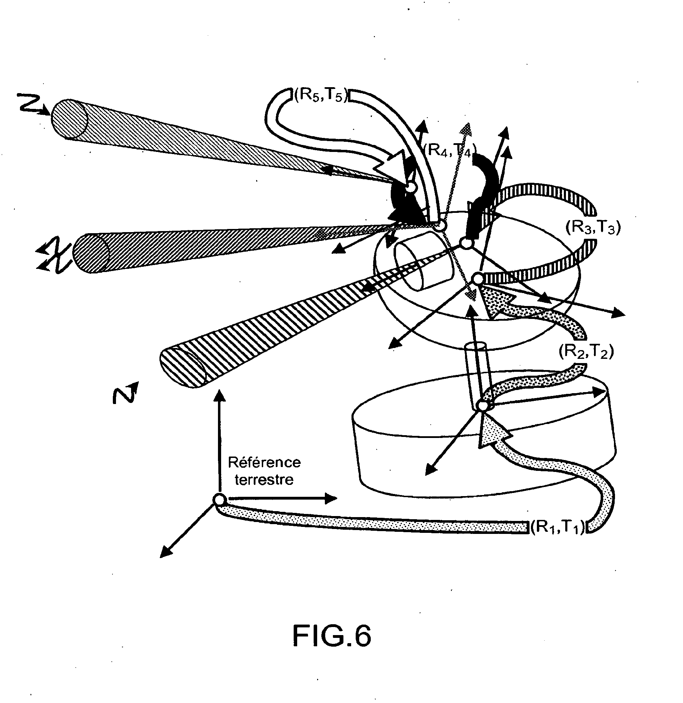

La modélisation physique des différents cardans du système est conduite d'après l'analyse des effets des contributions induites par les erreurs de translations (entres-axes) et de rotation (alignements d'axes) ainsi que de l'ordre des erreurs résiduelles que l'on cherche à déterminer. Cette analyse conditionne la finesse de la modélisation à retenir pour un équipement et un besoin donné. L'alimentation du processus d'estimation, par l'extraction de primitives de plusieurs vues correspondant à des détails d'éléments fixes dans la scène, permet de disposer d'un nombre important de mesures. Cette importante quantité permet d'envisager l'estimation d'un nombre élevé d'inconnues de calibrage dès lors que la qualité d'appariement, la répartition et la dilution (ou géométrie des CPDV) des primitives sont suffisantes et que les différentes transformations à caractériser sont bien séparables. La figure 6 illustre une telle situation où la rotation "R" et la translation "T" s'expriment en fonction des transformations élémentaires ($R_k$, $T_k$) entre les repères successifs comme :

$$R = \prod_{k=1}^{K} \dot{R}_k$$

$$T = \sum_{k=1}^{K} \left( \prod_{n=1}^{K-1} R_n \right) T_k$$

(équation 1)

Lorsque les transformations sont connues au premier ordre on recherche des solutions linéaires à ce système sous la forme :

$$R_k = R_{1k} . R_\varepsilon$$

$$T_k = T_{1k} + T_\tau$$

où la matrice de rotation élémentaire $R_\varepsilon$ et la translation élémentaire $T_\tau$ sont respectivement notées :

$$R_\varepsilon = \begin{pmatrix} 0 & -\varepsilon_Z & \varepsilon_Y \\ \varepsilon_Z & 0 & -\varepsilon_X \\ -\varepsilon_Y & \varepsilon_X & 0 \end{pmatrix}$$

$$T_\tau = \begin{pmatrix} \tau_X & \tau_Y & \tau_Z \end{pmatrix}^T$$

Pour estimer les éléments d'une rotation élémentaire placés à un certain rang dans (équation 1), on écrit les termes situés à leur "droite" de la rotation dans l'équation sous la forme d'un vecteur $U=(u1, u2, u3)^T$. Cette écriture permet d'obtenir simplement les éléments recherchés de la rotation en transformant le produit $R_\varepsilon.U$ en :

$$R_\varepsilon U = \begin{pmatrix} 0 & u_3 & -u_2 \\ -u_3 & 0 & u_1 \\ u_2 & -u_1 & 0 \end{pmatrix} \begin{pmatrix} \varepsilon_X \\ \varepsilon_Y \\ \varepsilon_Z \end{pmatrix}$$

La connaissance des transformations peut trouver son origine soit d'après des spécifications, évaluations ou calibrage sol par exemple soit à partir d'évaluations précédentes réalisées avec différentes conditions de fonctionnement du système.

Le type d'architecture matérielle de l'instrument utilisée pour la mesure d'angles d'attitude, conditionne le nombre de grandeurs à estimer. Celui-ci devient vite important avec l'augmentation du nombre de cardans mécaniques à composer pour disposer de l'attitude absolue de la ligne de visée ou "LdV". Le calcul d'attitude utilise 3K angles pour un montage du système faisant intervenir des mesures d'attitude relatives entre K cardans mécaniques.

Ainsi on ne cherchera pas à estimer les contributions d'orientation susceptibles d'intervenir au niveau de chaque cardan mécanique car ils peuvent rapidement être en nombre élevé. L'enchaînement de 2 rotations pures entre 2 cardans (ou repères), par exemple, est strictement équivalent à une rotation unique et l'estimation de la rotation globale ne permet pas de séparer l'information pour en attribuer une au niveau des contributions de chaque cardan. Dans le cas d'un montage ou d'une configuration où le biais de mesure d'attitude peut être considéré comme s'ajoutant directement à celui du montage, une méthode permettant d'évaluer directement l'orientation globale peut être suffisante pour caractériser globalement les défauts de biais (montage + mesures). L'application de la correction globale sur l'un des cardans remplira l'objectif recherché au profit des fonctions de localisation ou de pointage.

Le calcul d'attitude peut être réduit typiquement à un minimum de 3 rotations élémentaires pour un instrument de mesure qui estime l'attitude absolue de sa LdV au moyen d'un dispositif AHRS acronyme de l'expression anglo-saxonne "Attitude Heading Reference System".

Pour la suite, nous considérons un système pour lequel l'enchaînement de ces transformations se résume à une transformation de rotation "R" et translation "T" qui de manière générale permet d'exprimer les coordonnées d'un point dans le repère final en fonction de ses coordonnées dans le repère initial comme :

$$(OM)_N = R(OM)_1 + T$$

La description du processus proposé adopte ainsi une modélisation des biais angulaires et de position par cette transformation à 6 paramètres, bien qu'il soit possible de rentrer dans le détail d'une mécanisation spécifique plus complexe pour une configuration donnée de système.

La modélisation de la fonction de prise de vue d'une image i du capteur optronique situé en $(x_i, y_i, z_i)$ permet d'écrire de manière générale la fonction de localisation attribuant des coordonnées de position $(x, y, z)$ dans un repère géographique associé à la scène à un point k de coordonnées $(p_{ki}, q_{ki})$ dans un repère de l'image "i" sous la forme :

$$(x \quad y \quad z)^T = G(\Theta_i, p_{ki}, q_{ki})$$

$$\begin{pmatrix} x_i - x \\ y_i - y \\ z_i - z \end{pmatrix} = \mu_k R \begin{pmatrix} p_k - p_0 \\ q_k - q_0 \\ -f_0 \end{pmatrix}$$

Outre les éléments ($p_0$, $q_0$, $f_0$), les paramètres internes modélisent l'effet principal de la distorsion sous forme d'une déformation radiale des coordonnées pixel (p,q) parfaites en les transformant en (p',q') selon la forme suivante :

$$p' = p_c + L(r)(p - p_c)$$
$$q' = q_c + L(r)(q - q_c)$$
$$r = \sqrt{(p - p_c)^2 + (q - q_c)^2}$$

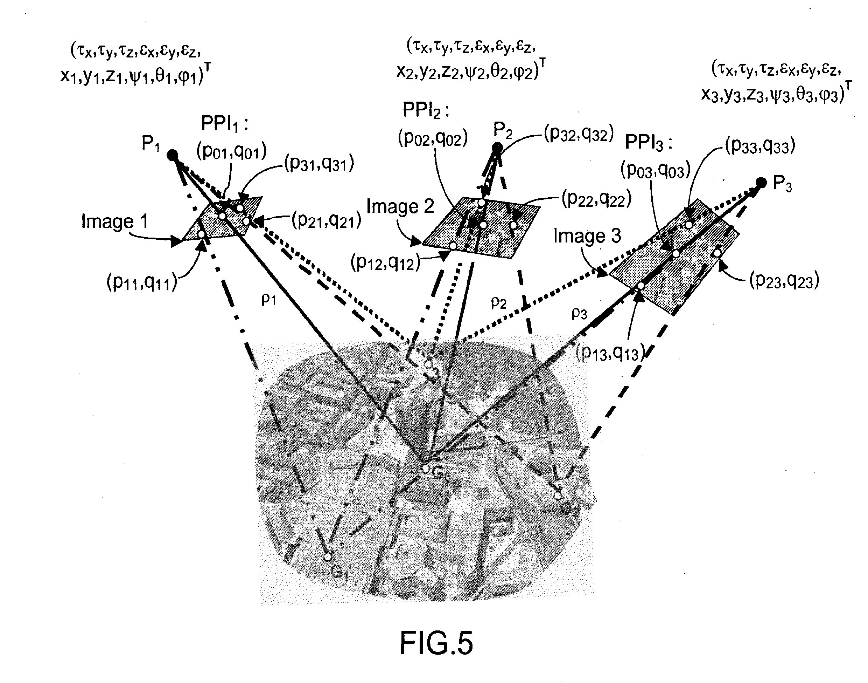

Dans cette expression, ($p_{ki}$,$q_{ki}$) sont les coordonnées images du point k dans l'image i, et (x, y, z) la coordonnée du point du sol correspondant. On note $u^T$ le transposée du vecteur u - et le vecteur $\Theta$ contient à la fois (voir figure 5) :

- les paramètres internes de prise de vue (focale, position du Point Principal Image (PPI) sur le détecteur, distorsion optique),
- les paramètres externes de prise de vue variant à chaque image "i" : position du $P_i$ du capteur de coordonnées ($x_i$, $y_i$, $z_i$) et l'attitude ($\psi_i$, $\theta_i$, $\varphi_i$) de l'image dans le repère de scène,
- les paramètres de calibrage ($\tau_x$, $\tau_y$, $\tau_z$, $\varepsilon_x$, $\varepsilon_y$, $\varepsilon_z$) communs aux différentes images,
- optionnellement la distance entre le PPI et le point de la scène correspondant au centre image si l'on dispose d'un télémètre harmonisé à l'axe optique.
- le pixel de coordonnées ($p_c$, $q_c$) correspond au centre de la distorsion aussi appelé Point Principal de Symétrie (PPS).

On note que les paramètres internes du système sont supposés ne pas varier d'une image à l'autre pendant la phase d'acquisition des mesures.

Le processus de calibrage proposé dispose des caractéristiques suivantes :

- une gestion automatique permet de sélectionner la zone visée afin de décider de la mise en oeuvre effective du processus selon :

  i. l'analyse du contenu de la scène basée sur le contraste de la zone imagée et sur les caractéristiques des primitives extraites par le traitement d'image,
  ii. le niveau de performance devant être obtenu afin d'assurer une performance requise de localisation ou de pointage en se basant sur une configuration donnée de trajectoire (exemple pour une plate-forme aéronautique naviguant sous plan de vol ou pour une plate-forme terrestre suivant un réseau de transport). Dans cette approche, on fait varier la zone d'observation sur une partition de la scène de l'ordre de la taille imagée et résume la performance du calibrage accessible en pointant le centre de cette zone. La performance est obtenue par la matrice d'information de Fisher (ou FIM pour acronyme de l'expression anglo-saxonne Fisher Information Matrix), dont l'expression est décrite un peu plus loin (équation 2), en échantillonnant la trajectoire à la cadence des mesures. La zone de meilleure performance accessible par le capteur est ensuite retenue pour les acquisitions,
  iii. le besoin de proposer une trajectoire pour le système ou d'évaluer la meilleure performance atteignable au moyen d'une technique idéale d'estimation ; pour cela, on propose de déterminer une configuration géométrique optimale (selon une description ultérieure d'optimisation basée sur la FIM).

- une séquence d'image,
- un mode de poursuite avec accrochage sur un point fixe de la scène apparaissant comme contrasté dans l'image,
- la recherche de primitives contrastées dans l'image "i", par extraction de points d'intérêt de coordonnées ($p_{ki}$, $q_{ki}$ pour k=1..$K_i$), de type coins, blob, ... ou par des descripteurs plus robustes basés sur les algorithmes tels que SIFT ou SURF (issus respectivement des expressions anglo-saxonnes Scale-invariant feature transform et Speeded Up Robust Features),
- la Mise En Correspondance (MEC) des primitives précédentes en exploitant la géométrie épipolaire des images pour la MEC entres images prises de positions assez éloignées ou des techniques plus classiques de suivi dans la séquence d'image. Un appariement (ou une MEC), de primitives (notées k et l) entre les images (notées i et j) donne lieu à une liaison de primitives sous la forme d'un couple $\{(p_{ki}, q_{ki}) ; (p_{lj}, q_{lj})\}$. Des liaisons sous forme de triplet ou quadruplet de primitives peuvent aussi être utilisées lorsqu'elles sont détectées entre 3 ou 4 images par exemple,

- l'estimation des paramètres qui peuvent être constitués en toute ou partie :

    i. des paramètres de prises de vue et de calibrage sur la séquence
    ii. des coordonnées des points $G_m$ du sol correspondant aux primitives appariées.
    iii. des paramètres internes au capteur (tels que focale, et distorsion) dans la mesure où les observations sont suffisamment denses sur l'image et variées en terme de CPDV afin de permettre leur estimation dans des conditions correctes d'observabilité.

L'estimation des paramètres est conduite de façon à minimiser l'ensemble des résidus sur les coordonnées au sol des primitives de liaisons extraites de la séquence.

Dans la pratique, le nombre minimum de primitives à utiliser dépend du nombre de paramètres à estimer. Chaque couple de primitives donne au minimum 2 équations d'observation et davantage si l'objet associé à la primitive est visible sur plus de 2 images. Ces couples se présentent en général en nombre important du fait des détails contrastés contenus dans la scène et du recouvrement important entre les images.

Le processus présente un avantage en matière d'autonomie du fait de sa capacité :

- à fonctionner sans utiliser de point d'amer,
- à accrocher et poursuivre automatiquement le point visé grâce à l'agilité de la LdV et son couplage au traitement d'écartométrie,
- à extraire et à apparier de manière robuste les primitives entre les images,
- à télémétrer automatiquement sur le point correspondant au centre image.

Le processus présente aussi un avantage de performance qui repose sur la qualité de l'estimation consistant :

- à maîtriser la cohérence de l'information optronique par la cohérence locale du détecteur et de la géométrie des prises de vue,
- à utiliser le télémètre, lorsque celui-ci peut être utilisé, pour relier la position du capteur à la scène sur la base de mesures de datations à fortes exactitudes (la position du capteur par les datations du GPS et la mesure de distance à la scène par la mesure de temps de vol).

Dans l'espace, la LdV issue d'un point $P_i$ ne croise pas la LdV issue d'un point $P_j$ du fait des erreurs de mesure. Dans la suite, on désigne par le point d'intersection Gij, le milieu du segment qui minimise la distance entre la LdV issue de $P_i$ et la LdV issue de $P_j$.

Il faut au moins deux points $G_{ij}$ pour permettre une première détermination de ces défauts, soit au moins 3 jeux de deux mesures d'angles ou 2 jeux de 3 mesures dont une mesure de distance. Pour ces 2 configurations, on dispose donc d'au moins 6 mesures : $\{(\theta_1, \varphi_1), (\theta_2, \varphi_2), (\theta_3, \varphi_3)\}$ en passif ou $((\theta_1, \varphi_1, \rho_1), (\theta_2, \varphi_2, \rho_2))$ en actif, où $\rho_i$ représente la mesure de distance entre $G_0$ et l'instrument de mesure (typiquement un télémètre) considéré à la position $P_i$. Bien sûr l'estimation de l'erreur est d'autant plus précise que l'on dispose de davantage de points $G_{ij}$ et que leur dispersion dans l'espace est plus importante.

La présence du télémètre est facultative car le processus est capable de fonctionner à partir de mesures angulaires seules. Sa présence permet d'accroître l'information recueillie et d'améliorer la performance.

On peut à l'inverse n'avoir que des mesures de distance "p" obtenues avec un télémètre harmonisé angulairement avec l'axe de la LdV ; on mesure alors une erreur $\Delta\rho$ sur la mesure du télémètre.

Cette configuration présente l'avantage de fonctionner sans composant de mesures inertielles ce qui d'une part réduit le coût matériel pour le système et d'autre part réduit les contraintes liées aux caractéristiques de ces mesures telles que dérive, constante d'intégration, intégration de bruit...

L'utilisation d'un télémètre (seul ou avec des moyens inertiels) suppose au préalable une harmonisation de son axe avec celui de l'image. Dans le cas contraire, la procédure proposée permet d'estimer l'alignement de l'axe laser avec l'axe image. Le champ d'application proposé peut être étendu en considérant que les mesures de distance, qui sont déduites d'une mesure de temps de propagation, peuvent être fournies par d'autres instruments qu'un télémètre comme par exemple un radar ou un sonar.

Les mesures utilisées dans le procédé selon l'invention peuvent être soit passives, soit actives, soit les deux.

Les mesures d'angles sont par exemple fournies par des moyens inertiels tels qu'une centrale inertielle, ou un compas magnétique ou encore à partir de références quasi-fixes comme des amers de l'espace (étoiles, planètes, satellites) ... : ce sont des mesures passives. On rappelle que le principe proposé repose sur une autonomie du système vis-à-vis des données externes ; on considère ainsi :

- comme acceptable de pointer l'imageur pour acquérir des corps célestes (étoiles, planètes, satellites), et de les apparier avec une information embarquée capable de couvrir l'ensemble du théâtre d'utilisation du capteur. Le capteur optronique dispose dans ce cas d'une fonction viseur d'étoile incluant la capacité de détection des centres des corps (fonction star camera en anglais) et leur identification (fonction star tracker en anglais).
- comme contraignant d'embarquer une information de type ortho-image, issue d'une préparation de mission, qui présente une résolution de l'ordre de grandeur de celle du capteur avec une couverture spatiale correspondant à l'ensemble des zones sur lesquelles le capteur est susceptible d'opérer. Les contraintes portent ici sur le plan des données à disposer, des opérations d'appariement robuste à réaliser et du volume des informations et opérations à traiter.

Selon l'utilisation faite des équations d'observation, on peut :

- soit estimer uniquement les défauts de mesure, et on parle de "Calibrage Par le Mouvement" ou "Registration From Motion" (RFM en anglais),
- soit estimer simultanément les défauts de mesure et la position du point visé (en compensant les erreurs de mesure par les défauts estimés), et on parle de "calibrage et localisation par le mouvement ou "Localization and Registration From Motion" (LRFM en anglais).

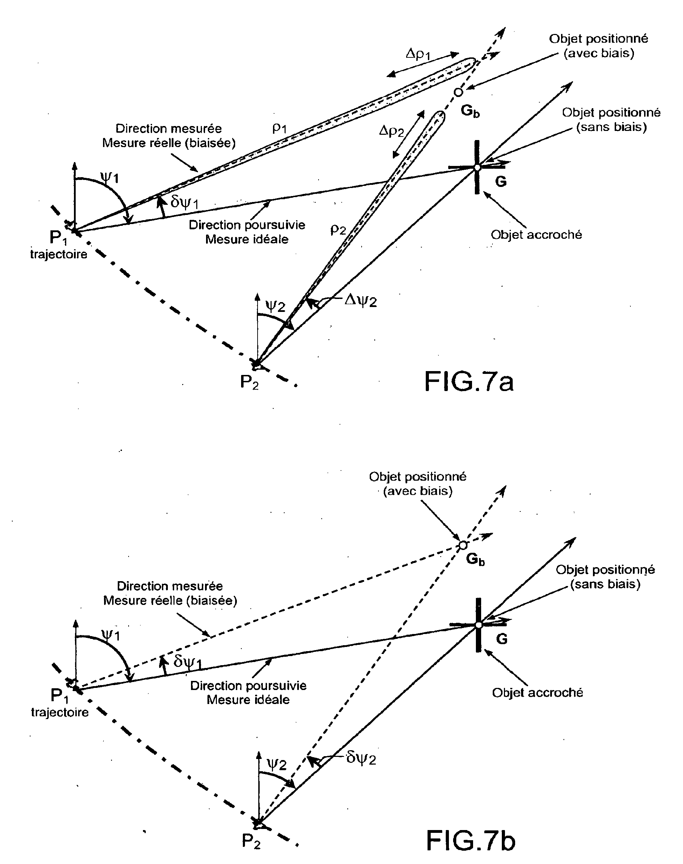

Ces deux variantes peuvent être réalisées à partir de mesures Passives (PRFM/PLRFM), ou Actives (ARFM/ALRFM). Les variantes dites actives peuvent aussi utiliser des mesures passives. Ainsi, nous désignons par PLRFM (pour Passive Localization and Registration From Motion) une application utilisant des mesures passives pour estimer les paramètres de calibrage par le mouvement du capteur (voir fig 7b). Dans le cas où l'on ajoute une mesure distance, l'application est désignée par ALRFM (pour Active LRFM) (voir fig 7a).

On va à présent donner des exemples d'utilisations des équations d'observation pour différentes applications.

- Application (1) : ARFM pour le calibrage d'instrument d'un capteur terrestre avec en particulier :

    i. le biais angulaire correspondant à la méconnaissance du montage et de la déclinaison utilisée par un compas magnétique et le biais de distance du télémètre,
    ii. les facteurs d'échelle sur la mesure d'angle et de distance.

- Application (2) : ALRFM pour le calibrage d'une direction en aéroporté avec le calcul de biais sur la direction angulaire et la mesure distance du télémètre.
- Application (3) : Localisation et calibrage à partir de mesures de positions et de distances seules.
- Application (4) : calibrage et géoréférencement des images par aéro-latération.

Deux autres aspects de mise en oeuvre du processus sont ensuite présentés en visant :

- l'automatisation de son fonctionnement et l'optimisation des conditions de recueil des informations,
- la prise en compte de la variabilité des paramètres estimés selon les conditions de fonctionnement (thermomécaniques).

Application (1) : calibrage d'instruments sur un capteur terrestre

Pour des applications terrestres, les systèmes optroniques proposent généralement une localisation de l'objet de la scène visé et placé au centre de l'image. Ceci est réalisé à partir d'une caméra comportant un récepteur GPS pour déterminer la position du capteur, un télémètre pour mesurer la distance à l'objet et un moyen de mesure d'orientation de la LdV. La mesure d'orientation s'appuie traditionnellement sur un compas magnétique (DMC acronyme de l'expression anglo-saxonne "Digital Magnetic Compass"). L'obtention d'une position géographique de bonne performance constitue un réel défi car les DMC, qui sont utilisés en raison de leurs faibles coût et encombrement, présentent les inconvénients suivants :

- la performance intrinsèque de la mesure est modérée (la précision est de l'ordre de 0.5°)
- l'exactitude d'alignement d'axe du DMC et de l'image est limitée pour maintenir une complexité de fabrication cohérente du volume des séries et du coût de l'équipement.

- La mesure d'orientation est réalisée en référence au méridien géomagnétique qui localement présente un écart d'orientation (déclinaison) en regard du Nord géographique. Cette valeur de déclinaison peut être obtenue d'après des informations de cartes géographiques ou des modèles géomagnétiques (tels que l'IGRF pour International Geomagnetic Reference Field ou le WMM pour World Magnetic Model). Ces modèles reposent sur le développement du potentiel du champ géomagnétique en série sous forme de produit de coefficients et de fonctions de bases utilisant les harmoniques sphériques. Ils permettent le calcul de l'amplitude ainsi que de la direction du champ magnétique local à partir des coefficients tabulés dans des versions de références publiées. Tous les 5 ans, l'IGRF devient ainsi le DGRF (avec "D" pour Definitive GRF) avec des données disponibles sur la période 1900-2010. Quel que soit le modèle de champ magnétique utilisé, l'orientation du champ doit être d'une part extrapolée en regard de la date courante de la mesure et d'autre part reste susceptible de varier localement avec une fréquence spatiale plus courte que celle correspondant à la résolution des modèles. L'écart entre la valeur obtenue par le modèle et celle effectivement réalisée au niveau du lieu de mesure se traduit essentiellement par une erreur systématique ou biais angulaire.

Pour ces différentes raisons, la procédure proposée présente un intérêt particulier puisqu'elle permet d'obtenir de manière simple et analytique les biais de mesure angulaire et de distance. Pour cela, elle utilise :

- un déplacement sur le terrain autour d'un objet fixe,
- au minimum 2 jeux de mesures sur l'objet, un jeu comportant la position du capteur, sa distance à l'objet, son azimut.

En présence de défaut de type biais sur les mesures d'angle et de distance, un point de position $(x_0, y_0)$ peut être directement localisé depuis une position $(x_k, y_k)$, d'après des mesures idéales :

$$x_0 = x_k + \rho_k \cos \theta_k$$

$$y_0 = y_k + \rho_k \sin \theta_k$$

En présence de biais sur les mesures d'angle et distance :

$$\theta_{kb} = \theta_k + \Delta_\theta$$

$$\rho_{kb'} = \rho_k + \Delta_\rho$$

le point situé à la position (vraie) de coordonnées $(x_0, y_0)$ et obtenu à la position $(x_b, y_b)$ donnée par :

$$x_b = x_k + \rho_{kb} \cos \theta_{kb} = x_k + (\rho_k + \Delta_\rho)\cos(\theta_k + \Delta_\theta)$$

$$y_b = y_k + \rho_{kb} \sin \theta_{kb} = y_k + (\rho_k + \Delta_\rho)\sin(\theta_k + \Delta_\theta)$$

soit, en négligeant les termes du deuxième ordre :

$$x_b \approx x_k + \rho_k \cos \theta_k - \Delta_\theta \rho_k \sin \theta_k + \Delta_\rho \cos \theta_k + O(\Delta^2) = x_0 - \Delta_\theta \rho_k \sin \theta_k + \Delta_\rho \cos \theta_k + O(\Delta^2)$$

$$y_b \approx y_k + \rho_k \sin \theta_k + \Delta_\theta \rho_k \cos \theta_k + \Delta_\rho \sin \theta_k + O(\Delta^2) = y_0 + \Delta_\theta \rho_k \cos \theta_k + \Delta_\rho \sin \theta_k + O(\Delta^2)$$

Sous la forme matricielle suivante, l'expression précédente montre que le déplacement correspond, au premier ordre, à une rotation du vecteur de biais de composante $(\Delta_\rho, \rho_k, \Delta_\theta)^T$ :

$$\begin{pmatrix} x_b \\ y_b \end{pmatrix} = \begin{pmatrix} x_0 \\ y_0 \end{pmatrix} + \begin{pmatrix} \cos\theta_k & -\sin\theta_k \\ \sin\theta_k & \cos\theta_k \end{pmatrix} \begin{pmatrix} \Delta_\rho \\ \rho_k\,\Delta_\theta \end{pmatrix} + \begin{pmatrix} 1 \\ 1 \end{pmatrix} O(b^2)$$

Cette expression traduit simplement la contribution des deux biais sur un positionnement (fig 4).

Une mesure unique ne permet évidemment pas de déterminer à la fois la position du point et les biais d'angle et de distance. En revanche deux mesures sur le même point suffisent, par différence, à déterminer les biais de la manière suivante :

$$\begin{pmatrix} -\rho_k\sin\theta_k + \rho_j\sin\theta_j & \cos\theta_k - \cos\theta_j \\ \rho_k\cos\theta_k - \rho_j\cos\theta_j & \sin\theta_k - \sin\theta_j \end{pmatrix}\begin{pmatrix} \Delta_\theta \\ \Delta_\rho \end{pmatrix} = \begin{pmatrix} x_j + \rho_j\cos\theta_j - x_k - \rho_k\cos\theta_k \\ y_j + \rho_j\sin\theta_j - y_k - \rho_k\sin\theta_k \end{pmatrix} + \begin{pmatrix} 1 \\ 1 \end{pmatrix}\varepsilon_{jk}$$

Pour un couple de mesure (j, k), les expressions des biais peuvent être obtenues de manière analytique. Le déterminant du système vaut :

$$\delta = (\rho_k + \rho_j)[\cos(\theta_k - \theta_j) - 1] = -2(\rho_j + \rho_i)\sin^2\left(\frac{\theta_k - \theta_j}{2}\right)$$

et les expressions des biais d'angle et distance sont obtenues, dans les conditions d'observabilité (δ non nul), d'après :

$$\Delta_\theta \times \delta = (x_j - x_k)(\sin\theta_k - \sin\theta_j) - (y_j - y_k)(\cos\theta_k - \cos\theta_j) + (\rho_j - \rho_k)\sin(\theta_k - \theta_j)$$

pour le biais de distance et pour le biais angulaire par :

$$\Delta_d \times \delta = (x_j - x_k)(\rho_j\cos\theta_j - \rho_k\cos\theta_k) + (y_j - y_k)(\rho_j\sin\theta_j - \rho_k\sin\theta_k) - 2\rho_j\rho_k\cos(\theta_k - \theta_j) + \rho_j^2 + \rho_k^2$$

Le système précédent dispose d'une solution physique lorsque son discriminant δ est différent de zéro ; on note par ailleurs que celui-ci :

- s'approche de zéro lorsque $\theta_k \approx \theta_j$. Autrement dit un faible déplacement du capteur entre deux mesures correspondant à une mauvaise configuration,
- est extrémal (de valeur -2) lorsque $\theta_k \approx \theta_j + \pi$ d'une part et que d'autre part les distances aux points sont grandes. Ceci correspond à des visées de directions opposées à grande distance du point.

Ainsi, les conditions dans lesquelles le calibrage se trouve être optimal sont opposées aux conditions pour lesquelles la localisation est idéale. Pour être efficace, le calibrage nécessite une sensibilité à l'erreur qui pour cela doit être grande alors que la localisation demande de n'y être pas sensible.

Pour améliorer la performance en présence d'erreur de mesure angulaire il faut :

- d'une part éviter de localiser un point à partir de visées de directions opposées, et,
- d'autre part, essayer de s'en rapprocher pour diminuer la sensibilité aux erreurs angulaires.

Cette dualité entre la localisation et le calibrage n'est pas limitée à la performance ni spécifique à cette application.

En présence de défauts de type biais et facteur d'échelle, sur les mesures d'angles et de distance, on écrit les mesures comme :

$$\theta_{kbf} = (1 + f_\theta)\theta_k + \Delta_\theta$$

$$\rho_{kbf} = \left(1 + f_\rho\right)\rho_{k_i} + \Delta_\rho$$

$$x_{bf} = x_k + \rho_{kbf}\cos\theta_{kbf} = x_k + \left(\left[1 + f_\rho\right]\rho_k + \Delta_\rho\right)\cos\left(\left[1 + f_\theta\right]\theta_k + \Delta_\theta\right)$$

$$y_{bf} = y_k + \rho_{kbf}\sin\theta_{kbf} = y_k + \left(\left[1 + f_\rho\right]\rho_k + \Delta_\rho\right)\sin\left(\left[1 + f_\theta\right]\theta_k + \Delta_\theta\right)$$

Soit une expression de la localisation au premier ordre de la forme :

$$x_{bf} \approx x_b - f_\theta\,\theta_k\,\rho_k\,\sin\theta_k + f_\rho\,\rho_k\,\cos\theta_k$$

$$y_{bf} \approx y_b + f_\theta\,\theta_k\,\rho_k\,\cos\theta_k + f_\rho\,\rho_k\,\sin\theta_k$$

$$\begin{pmatrix} -\rho_k\sin\theta_k + \rho_j\sin\theta_j & \cos\theta_k - \cos\theta_j & -\theta_k\rho_k\sin\theta_k + \theta_j\rho_j\sin\theta_j & \rho_k\cos\theta_k - \rho_j\cos\theta_j \\ \rho_k\cos\theta_k - \rho_j\cos\theta_j & \sin\theta_k - \sin\theta_j & \theta_k\rho_k\cos\theta_k - \theta_j\rho_j\cos\theta_j & \rho_k\sin\theta_k - \rho_j\sin\theta_j \end{pmatrix} \begin{pmatrix} \Delta_\theta \\ \Delta_\rho \\ f_\theta \\ f_\rho \end{pmatrix}$$

$$= \begin{pmatrix} x_j + \rho_j\cos\theta_j - x_k - \rho_k\cos\theta_k \\ y_j + \rho_j\sin\theta_j - y_k - \rho_k\sin\theta_k \end{pmatrix} + \begin{pmatrix} 1 \\ 1 \end{pmatrix}\varepsilon_{jk}$$

Au premier ordre, l'estimée s'écrit en fonction de la mesure :

$$\theta_k = \frac{\theta_{kbf} - \Delta_\theta}{1 + f_\theta} \approx \left(1 - f_\theta\right)\theta_{kbf} - \Delta_\theta$$

$$\rho_k = \frac{\rho_{kbf} - \Delta_\rho}{1 + f_\rho} \approx \left(1 - f_\rho\right)\rho_{kbf} - \Delta_\rho$$

Notons qu'en 3D, on se rapproche de cette situation 1 D dans les cas :

- de visée latérale à grande distance de l'objet et faible hauteur du sol,
- de visée verticale en avançant sur le point d'intérêt.

Cette approche se généralise simplement en 3D, avec des expressions analytiques plus longues à développer. En N=2 ou 3 (N étant le nombre de dimensions), deux jeux de mesures permettent d'écrire 2xN relations et par différences, N relations permettent de déterminer les N biais sur chaque type de mesure ($\Delta\rho$, $\Delta\theta$) en 2D, complétés par $\Delta\varphi$ en 3D.
Les valeurs de correction sur les mesures biaisées sont ensuite obtenues en ajoutant aux valeurs des mesures biaisées, l'opposé des biais obtenus. Ainsi, la position du point G(x,y) visé s'obtient d'après :

$$x = x_k + \left(\rho_m - \Delta\rho\right)\cos\left(\theta_m - \Delta\theta\right)$$

$$y = y_k + \left(\rho_m - \Delta\rho\right)\sin\left(\theta_m - \Delta\theta\right)$$

En présence de biais seuls, on obtient par exemple pour les deux couples de configurations du tableau suivant, correspondant à un objet $G_0$ situé en [0,0], avec la présence d'un biais de -1° sur la mesure DMC et de 5m sur la mesure de distance, une estimation de biais :
- sur la distance à mieux que 1 m près,
- sur l'azimut à 5 μrad près.

| $P_k$ [$x_k$,$y_k$] (m,m) | Distance $\rho_k$ (m) | Angle $\theta_k$ (°) |
|---|---|---|
| [-5000, 2500] | 5590.2 | -26.6 |
| [2500, 2500] | 3535.5 | -135 |

Application (2) : localisation et calibrage à partir de mesures angulaires et distance en aéroporté (ALRFM).

Pour des applications aéro-terrestres, on considère un système comprenant un capteur en mouvement fonctionnant avec un mode de poursuite sur un objet de la scène. Dans cette situation, le système procure tout au long d'une trajectoire de nombreuses mesures composées de positions du capteur, de mesures angulaires de la LdV du capteur et de distances du capteur à l'objet de la scène.

Considérons une application ALRFM cherchant à estimer 2 biais angulaires ($\Delta\psi$, $\Delta\theta$) et un biais en distance ($\Delta\rho$) avec un capteur en poursuite sur un point du sol de coordonnées (x0, y0, z0) inconnues et son pendant PRFM lorsque la mesure de distance $\rho$ n'est pas disponible.

L'écriture des équations d'observations permet d'écrire lorsque l'on cherche simultanément les biais de mesure et la position du point accroché au sol (ALRFM) par exemple :

$$\begin{pmatrix} 1 & 0 & 0 & \cos\psi_k\cos\theta_k & -\rho_k\sin\psi_k\cos\theta_k & -\rho_k\cos\psi_k\sin\theta_k \\ 0 & 1 & 0 & \sin\psi_k\cos\theta_k & \rho_k\cos\psi_k\cos\theta_k & -\rho_k\sin\psi_k\sin\theta_k \\ 0 & 0 & 1 & \sin\theta_k & 0 & \rho_k\cos\theta_k \end{pmatrix} \begin{pmatrix} x_0 \\ y_0 \\ y_0 \\ \Delta_\rho \\ \Delta_\psi \\ \Delta_\theta \end{pmatrix} = \begin{pmatrix} x_k \\ y_k \\ z_k \end{pmatrix} + \rho_k \begin{pmatrix} \cos\psi_k\cos\theta_k \\ \sin\psi_k\cos\theta_k \\ \rho_k\sin\theta_k \end{pmatrix} + v_k$$

Si l'on souhaite uniquement réaliser le calibrage, les coordonnées du point au sol peuvent être supprimées des équations d'observation et l'on se place alors dans les situations de calibrage seul PRFM et ARFM.

Avec 2 jeux de mesures ($x_k$, $y_k$, $z_k$, $\psi_k$, $\theta_k$, $\rho_k$), comme sur la (fig 7a) on dispose de 6 équations qui permettent de déterminer explicitement la position de l'objet et les biais de mesures. Avec des jeux de mesures en nombre plus important, le système précédent est simplement résolu, de par sa linéarité, par moindre carré ou par filtrage.

Application (3) : Localisation et calibrage à partir de positions et distances

Pour calibrer des défauts de mesure et disposer d'une information de biais de bonne exactitude, le bilan des erreurs système indique qu'il est pertinent d'établir une localisation de l'objet sans utiliser les mesures angulaires. Dans cette application, nous proposons une estimation simultanée :

- de la position de l'objet uniquement à partir des mesures de position du capteur et des mesures distance,
- des défauts de mesure distance (biais et facteur d'échelle).

Si souhaité, la connaissance de la position estimée de l'objet (à partir des mesures corrigées de leur défaut) permet de corriger a posteriori des défauts angulaires.

Dans le cas de plusieurs mesures distances $\rho_k$, réalisées en des positions $P_k(x_k, y_k, z_k)$, les défauts de biais et de facteur d'échelle peuvent être estimés en maintenant le capteur pointé sur un même objet le long de la trajectoire.

Ainsi, pour un ensemble de mesures actives, présentant une erreur de biais $b_\rho$, de facteur d'échelle $s_\rho$ et un bruit de mesure $v_\rho$, on cherche à minimiser l'ensemble des quantités suivantes :

$$\delta_n = \sqrt{(x - x_n)^2 + (y - y_n)^2 + (z - z_n)^2} - \rho_n - s_\rho\rho_n - b_\rho - v_\rho$$

où (x,y,z) sont les coordonnées terrain du point suivi et $(x_n, y_n, z_n)$ sont les positions du capteur pour lesquelles on dispose d'une mesure de la distance "$d_n$" séparant le capteur de l'objet. Les défauts du télémètre $(s_\rho, b_\rho, v_\rho)$ caractérisent respectivement son facteur d'échelle, son biais et le bruit de mesure.

Dans l'approche LRFM on cherche à la fois la position de l'objet visé et les défauts de mesure. Le vecteur d'état constitué des paramètres à estimer s'écrit :

$$\boldsymbol{\Theta} = \begin{bmatrix} x & y & z & b_\rho & s_\rho \end{bmatrix}^T$$

$u^T$ représentant le transposé du vecteur u.

Dans l'approche RFM, le vecteur des paramètres est réduit aux 2 dernières composantes du vecteur précédent.

Dans la pratique, on peut disposer d'une première position approchée de l'objet $\Theta_0$, en utilisant tout ou partie des mesures supposées sans défaut. On dispose alors du vecteur d'état suivant :

$$\boldsymbol{\Theta_0} = \begin{bmatrix} x_0 & y_0 & z_0 & 0 & 0 \end{bmatrix}^T$$

Le vecteur d'état du système avec les N mesures peut alors être obtenu par une approche itérative classique sous la forme :

$$\boldsymbol{\Theta_k} = \boldsymbol{\Theta_{k-1}} + \boldsymbol{\Delta\Theta_k}$$

où :

$$\boldsymbol{\Delta\Theta_k} = -\left(\mathbf{H^T R^{-1} H}\right)^{-1} \mathbf{H^T \Sigma^{-1}} \boldsymbol{\delta(\Theta_{k-1})}$$

avec pour N mesures de distance une matrice d'observation H et l'incrément sur le vecteur des composantes de calibrage $\delta\Theta$ :

$$\mathbf{H} = \nabla_\Theta \boldsymbol{\delta} = \begin{pmatrix} \dfrac{x - x_1}{\rho_1} & \dfrac{y - y_1}{\rho_1} & \dfrac{z - z_1}{\rho_1} & -1 & -\rho_1 \\ \vdots & \vdots & \vdots & \vdots & \vdots \\ \dfrac{x - x_N}{\rho_N} & \dfrac{y - y_N}{\rho_N} & \dfrac{z - z_N}{\rho_N} & -1 & -\rho_N \end{pmatrix}$$

$$\boldsymbol{\delta(\Theta_{k-1})} = \begin{bmatrix} \delta_1(\Theta_{k-1}) \\ \vdots \\ \delta_N(\Theta_{k-1}) \end{bmatrix}$$

La matrice $\Sigma$ représente la covariance du bruit de mesure ; elle se réduit au produit de la matrice identité par $\sigma_\rho^2$ lorsque les mesures ont toutes le même bruit $\sigma_\rho$ et que les bruits sont indépendants entres eux.

L'application à des trajectoires particulières démontre la capacité de la méthode à estimer simultanément la position de l'objet et les défauts de mesure. Pour estimer correctement à la fois le biais et le facteur d'échelle sur la distance, on choisit de préférence les configurations pour lesquelles la distance à l'objet ne reste pas constante. En effet, dans la situation où la distance à l'objet varie, la contribution d'erreur liée au facteur d'échelle ne se comporte pas comme un biais et il est alors possible de distinguer les deux origines physiques des défauts.

Application (4) : calibrage et localisation par aéro-latération

Parmi les applications présentées, celle-ci représente la déclinaison la plus générale dans le sens où elle permet de corriger en 3D le géoréférencement de l'image en estimant les paramètres de calibrage en rendant compte :

- que les biais angulaires à estimer existent dans les trois directions de l'espace,
- que des mesures actives puissent être utilisées ou non,
- qu'un modèle numérique de terrain ou une hypothèse de sol est disponible sur la scène,
- que les paramètres à estimer comportent des contributions relatives aux paramètres internes du capteur,
- que les paramètres à estimer comprennent ou non la localisation simultanée d'objet de la scène.

Ce procédé peut être étendu à d'autres objets fixes $G_1$, $G_2$, ..., en plus de $G_0$. Ces autres objets fixes doivent bien sûr être visibles sur les images ou au moins sur certaines d'entre elles. Ils sont de préférence bien répartis autour de $G_0$ de manière à disposer d'une configuration d'estimation plus favorable. Dans ce cas le procédé comprend une étape supplémentaire de mise en correspondance d'une image à l'autre de ces autres objets, en fonction des caractéristiques internes des images. Celles-ci dépendent des caractéristiques internes du capteur qui sont supposées connues ; il s'agit :

- pour le détecteur : de la résolution du détecteur, du nombre de lignes et de colonnes de la matrice photosensible, et
- pour l'optique : de la focale, des coordonnées du point principal image et de la distorsion.

Exploiter plusieurs points fixes $G_1$, $G_2$, ... sur plusieurs images permet d'estimer les défauts de mesure sur les trois degrés de liberté angulaire : $\Delta\psi$, $\Delta\theta$ et $\Delta\varphi$. La poursuite et les éventuelles mesures de distances sont réalisées sur le point fixe $G_0$ au centre des images, et au moins un autre point fixe du sol visible de la séquence d'images doit être suivi. Dans la pratique, plusieurs objets de la scène donnant lieu à des points d'intérêt sont suivi simultanément ce qui limite la perte d'observation lorsque des objets viennent à quitter le champ de vision instantané du capteur, améliore le résultat d'estimation et la probabilité de disposer de points mieux répartis sur l'ensemble de l'image.

Les paramètres de calibrage sont obtenus en minimisant l'expression suivante :

$$\Theta_R = \min \chi^2$$

$$\chi^2 = v^2(\Theta_R) + v^2(\Theta_{Ii}) + \sum_{i=1}^{I}\left[ v^2(\Theta_{Ei}) + v^2(\rho_{0i}) + v^2(A_i) + \sum_{k=1}^{K} v^2(P_{ik}) \right]$$

où les quantités représentent respectivement les résidus sur : les paramètres de calibrage, les paramètres externes de prise de vue, les paramètres internes (ou intrinsèques) du capteur, la distance en centre image, les éventuelles coordonnées de points du sol correspondant aux primitives, les primitives. En exprimant ceci avec plus de détails :

$$v^2(\Theta_R) = \delta_{\Theta_R}^T \Sigma_{\Theta_R}^{-1} \delta_{\Theta_R}$$

$$\delta_{\Theta_R} = \begin{pmatrix} \tau_x - \tau_x^* & \tau_y - \tau_y^* & \tau_z - \tau_z^* & \varepsilon_x - \varepsilon_x^* & \varepsilon_y - \varepsilon_y^* & \varepsilon_z - \varepsilon_z^* \end{pmatrix}^T$$

$$v^2(\Theta_{Ii}) = \delta_{Ii}^T \Sigma_{Ii}^{-1} \delta_{Ii}$$

$$\delta_{Ii} = \begin{pmatrix} p_0 - p_0^* & q_0 - q_0^* & f_0 - f_0^* & p_c - p_c^* & q_c - q_c^* & K_1 - K_1^* \end{pmatrix}^T$$

$$v^2(\Theta_{Ei}) = \delta_{Ei}^T \Sigma_{Ei}^{-1} \delta_{Ei}$$

$$\delta_{Ei} = \begin{pmatrix} x_i - x_i^* & y_i - y_i^* & z_i - z_i^* & \psi_i - \psi_i^* & \theta_i - \theta_i^* & \varphi_i - \varphi_i^* \end{pmatrix}^T$$

$$v(\rho_{0i}) = \delta_{\rho_{0i}}^T \Sigma_{\rho_{0i}}^{-1} \delta_{\rho_{0i}}$$

$$\delta_{\rho_{0i}} = \rho_{0i} - \rho_{0i}^*$$

$$\Lambda_{\rho_{0i}} = E[d_{ki} d_{ki}^T] = \sigma_\rho^2$$

$$\rho_{0i} = \sqrt{(x_{G0} - x_{ki})^2 + (y_{G0} - y_{ki})^2 + (z_{G0} - z_{ki})^2}$$

$$v^2(A_i) = \begin{pmatrix} x_i - x_G & y_i - y_G & z_i - z_G \end{pmatrix} \Sigma_A^{-1} \begin{pmatrix} x_i - x_G & y_i - y_G & z_i - z_G \end{pmatrix}^T$$

$$v^2(P_{ik}) = \delta_{Pik}^T \Sigma_{Pik}^{-1} \delta_{Pik}$$

$$\delta_{Pik} = \left[ \begin{pmatrix} x_{Gk} & y_{Gk} & z_{Gk} \end{pmatrix} - G(\Theta_i, p_{ik}, q_{ik}) \right]^T$$

$$\Sigma_{Pik} = \begin{pmatrix} \sigma_{pik}^2 & \sigma_{pq} \\ \sigma_{pq} & \sigma_{qik}^2 \end{pmatrix}$$

Les quantités $\Sigma$ et $\sigma$ représentent les covariances a priori sur les paramètres.

La méthode de minimisation du critère repose sur une technique classique :

- soit de type Newton en traitant les observations par lot, partant d'une solution initiale, utilisant les mesures relevées pour les paramètres de prise de vue, la connaissance approchée des paramètres internes du capteur (si ceux-ci doivent être estimés), et le fait que les valeurs des paramètres de calibrage sont faibles soit $\Theta_R = (0,0,0,0,0,0)^T$ puis en procédant par itération après linéarisation pour minimiser le critère. Chaque étape fournit une estimation des différences $d\Theta_R$, $d\Theta_{Ei}$, ... qui permet de reprendre l'estimation depuis l'étape initiale

- soit de type Kalman en traitant les mesures à la volée c'est à dire en estimant le vecteur de paramètre au fur et à mesure de la production des mises en correspondance entre les images de la séquence

- soit par relaxation en estimant dans une étape N°1 les paramètres de prise de vue, $\Theta_{Ei1}$, $\Theta_{R1,1}$ étant supposé nul (pas de biais) ; puis dans une étape N°2 en estimant $\Theta_{R1,2}$ à partir des paramètres externes obtenus à l'étape 1. Le processus d'estimation reprend ensuite l'étape N°1 avec la valeur $\Theta_{Rn-1,2}$ des paramètres de calibrage pour obtenir un jeux de paramètres de prise de vue $\Theta_{Ein}$. Permettant d'estimer $\Theta_{Rn,2}$ ; et ceci jusqu'à convergence.

Mise en oeuvre du processus et optimisation de la performance

Pour améliorer la performance sur les estimations du calibrage et/ou de fournir un support à la gestion automatique de l'instrument de mesure et/ou à la fonction de navigation de la plate-forme, on propose :

1) partant d'une trajectoire donnée (sous plan de vol), rechercher la zone idéale sur laquelle pointer le capteur pour réaliser le calibrage,

2) partant de la position d'un objet sur lequel le capteur doit réaliser son calibrage, proposer une trajectoire permettant de se rapprocher de la performance idéale d'estimation.

Dans le détail, on cherche à améliorer la performance sur les paramètres estimés lors du calibrage :

1) en adaptant la trajectoire sur un point visé. Pour cela, on calcule en partant d'une position initiale $P_0$ et d'une vitesse $V_0$, des positions futures $P_1$, $P_2$, ... qui optimiseront la performance d'estimation. Pour réaliser cette optimisation; on utilise par exemple l'information de Fisher (FIM Fisher Information Matrix) qui quantifie l'information relative au jeux de mesure en vue de la meilleure estimation possible du biais. Elle présente comme intérêt son caractère d'additivité qui permet de cumuler l'information apportée par la trajectoire jusqu'au point $P_n$ aux différentes possibilités qui peuvent s'envisager au temps $T_{n+1}$. Partant des informations de mesure et de la connaissance approximative de la position d'un objet sur lequel calibrer, l'optimisation de la trajectoire a pour but d'atteindre une meilleure performance de calibrage que celle qui serait obtenue en suivant par exemple un plan de vol préétabli. Partant d'une vitesse initiale, on propose de remettre en cause le vecteur vitesse prévu pour la plate-forme. Ceci est réalisé sur un pas de distance spatiale et de cap avec une amplitude compatible des contraintes cinématiques de la plate-forme (selon accélération admissible). Partant d'un noeud courant, un ensemble de noeuds est alors obtenu dont celui retenu correspond à la valeur maximale d'un critère de la FIM (basé sur la trace ou déterminant ou combinaison des valeurs propres). On propose de procéder à chaque pas en azimut puis en site.

2) en agissant sur le choix de l'objet $G_0$ à viser. Pour une trajectoire prédéfinie (cas d'une plate-forme sous plan de vol) ; on utilise la capacité d'agilité de la LdV de l'instrument de mesure de manière à pointer sur une zone de l'espace qui produira une information de Fisher la plus grande pour les caractéristiques de trajectoire et de mesure (cadence, géométrie et précision) fixées. Pour cela, on échantillonne la zone de la scène accessible pour réaliser le calibrage selon une grille spatiale dont les noeuds portent les calculs d'information de Fisher. L'objet est ensuite choisit dans la zone correspondant au noeud où l'information est la plus grande. La décision de travailler effectivement sur cette zone peut ensuite être conditionnée au nombre, à la répartition et au contraste des objets d'intérêt que détecte le capteur lorsqu'il se trouve pointer sur cette zone.

Pour une information correspondant aux mesures de l'instant k, les matrices d'information de Fisher, évoquées ci-dessus, prennent les formes suivantes :

$$FIM(k) = J_k^T \Lambda_k^{-1} J_k$$

(équation 2)

où les matrices J et A représentant les Jacobiennes et Covariances de mesures s'écrivent pour le calibrage ALRFM et PLRFM comme :

$$J_{ALRFM}(k) = \begin{bmatrix} \dfrac{\partial\Delta_\rho}{\partial x_0} & \dfrac{\partial\Delta_\psi}{\partial x_0} & \dfrac{\partial\Delta_\theta}{\partial x_0} \\ \dfrac{\partial\Delta_\rho}{\partial y_0} & \dfrac{\partial\Delta_\psi}{\partial y_0} & \dfrac{\partial\Delta_\theta}{\partial y_0} \\ \dfrac{\partial\Delta_\rho}{\partial z_0} & \dfrac{\partial\Delta_\psi}{\partial z_0} & \dfrac{\partial\Delta_\theta}{\partial z_0} \\ \dfrac{\partial\Delta_\rho}{\partial\Delta_\rho} & \dfrac{\partial\Delta_\psi}{\partial\Delta_\rho} & \dfrac{\partial\Delta_\theta}{\partial\Delta_\rho} \\ \dfrac{\partial\Delta_\rho}{\partial\Delta_\psi} & \dfrac{\partial\Delta_{\psi'}}{\partial\Delta_{\psi'}} & \dfrac{\partial\Delta_\theta}{\partial\Delta_\psi} \\ \dfrac{\partial\Delta_\rho}{\partial\Delta_\theta} & \dfrac{\partial\Delta_\psi}{\partial\Delta_\theta} & \dfrac{\partial\Delta_\theta}{\partial\Delta_\theta} \end{bmatrix} = \begin{bmatrix} -\dfrac{dx_k}{\rho_k} & \dfrac{dy_k}{r_k^2} & \dfrac{dx_k}{r_k}\dfrac{dz_k}{\rho_k^2} \\ -\dfrac{dy_k}{\rho_k} & -\dfrac{dx_k}{r_k^2} & \dfrac{dy_k}{r_k}\dfrac{dz_k}{\rho_k^2} \\ -\dfrac{dz_k}{\rho_k} & 0 & -\dfrac{r_k}{\rho_k^2} \\ 1 & 0 & 0 \\ 0 & 1 & 0 \\ 0 & 0 & 1 \end{bmatrix}$$

$$J_{PLRFM}(k) = \begin{bmatrix} \dfrac{\partial\Delta_\psi}{\partial x_0} & \dfrac{\partial\Delta_\theta}{\partial x_0} \\ \dfrac{\partial\Delta_\psi}{\partial y_0} & \dfrac{\partial\Delta_\theta}{\partial y_0} \\ \dfrac{\partial\Delta_\psi}{\partial z_0} & \dfrac{\partial\Delta_\theta}{\partial z_0} \\ \dfrac{\partial\Delta_\psi}{\partial\Delta_\psi} & \dfrac{\partial\Delta_\theta}{\partial\Delta_\psi} \\ \dfrac{\partial\Delta_\psi}{\partial\Delta_\theta} & \dfrac{\partial\Delta_\theta}{\partial\Delta_\theta} \end{bmatrix}_k = \begin{bmatrix} \dfrac{dy_k}{r_k^2} & \dfrac{dx_k}{r_k}\dfrac{dz_k}{\rho_k^2} \\ -\dfrac{dx_k}{r_k^2} & \dfrac{dy_k}{r_k}\dfrac{dz_k}{\rho_k^2} \\ 0 & -\dfrac{r_k}{\rho_k^2} \\ 1 & 0 \\ 0 & 1 \end{bmatrix}$$

Les matrices de covariances $\Lambda$ sont diagonales avec sur la diagonale les termes $\Lambda_{ALRFM}$ = diag [$\sigma x^2$, $\sigma y^2$, $\sigma z^2$, $\sigma p^2$, $\sigma\psi^2$, $\sigma\theta^2$] en ARFM et $\Lambda_{PLRFM}$ = diag [$\sigma x^2$, $\sigma y^2$, $\sigma z^2$, $\sigma\psi^2$, $\sigma\theta^2$] en PRFM. Dans ces expressions :

$$dx_k = x_k - x_0 = \rho\cos\psi\cos\theta$$

$$dy_k = y_k - y_0 = \rho\sin\psi\cos\theta$$

$$dz_k = z_k - z_0 = \rho \sin\theta$$

$$\rho_k = \sqrt{r_k^2 + (z_k - z_0)^2}$$

$$r_k = \sqrt{(x_k - x_0)^2 + (y_k - y_0)^2}$$

Des évaluations réalisées sur plusieurs scénarios montrent que l'estimation des défauts de biais (plus précisément de leur module) est favorisée avec des trajectoires rectilignes allant vers le point $G_0$ ou en passant sur un objet $G_0$ situé au voisinage de l'aplomb de la trajectoire.

Mise en oeuvre du processus avec une variabilité des paramètres estimés selon les conditions de fonctionnement

Dans les différentes applications proposées, il est possible d'introduire la variabilité des conditions de fonctionnement dans les processus de modélisation et d'estimation. Pour cela, la modélisation introduit une dépendance des paramètres aux conditions thermomécaniques relevées.

Ainsi lorsque l'étude du système montre que les valeurs du paramètre de calibrage à estimer sont sensibles aux conditions de fonctionnement, celui-ci est modélisé avec une dépendance aux conditions thermomécaniques. De manière simple on utilise une modélisation polynomiale qui présente pour avantage de conserver la linéarité du système à résoudre en regard des paramètres à estimer. Par exemple on écrit l'évolution du paramètre "a" avec la température en utilisant un développement, limité à l'ordre N, autour d'une température moyenne d'utilisation $T_0$ sous la forme :

$$a(T) = \sum_{n=0}^{N} a_n (T - T_0)^n$$

En limitant le développement au premier ordre, l'estimation de $a_0$, consiste à résoudre un système identique au précédent qui se trouve être indépendant des conditions thermiques. Au premier ordre, la mesure de la température T permet l'estimation du coefficient $a_1$, dérive thermique du paramètre "a".

Sur les applications proposées, les performances obtenues sur des scénarios typiques sont :

- pour les angles de montage de l'instrument de mesure sur la plate-forme, de l'ordre de 1‰ de leur valeur ;
- pour les biais de mesures de l'ordre de quelques % de leur valeur. Ceci pour des mesures angulaires fournies par des composants inertiels, pour des mesures de distance fournies par un télémètre ainsi que pour les facteurs d'échelle existant sur les grandeurs mesurées.

Appliqué à la localisation, ce procédé permet de maintenir une exactitude décamétrique sur la localisation pour la reconnaissance et la désignation d'objectifs au sol en présence de biais.

Le procédé proposé peut être mis en oeuvre dans les conditions suivantes :

- soit de manière supervisée, dans une approche sur une zone d'intérêt, le superviseur du système optronique aéroporté décide d'établir un calibrage du système de mesure. Il décide alors d'une zone (CPDV) adéquate sur laquelle le point d'accrochage $G_0$ est recherché. Le point $G_0$ peut être choisi par le superviseur (ainsi qu'éventuellement les autres points $G_1$, $G_2$, ...),
- soit de manière automatique, dans un mode où le capteur est disponible au sens où il n'est pas exploité pour une fonction opérationnelle. Compte tenu de la trajectoire de l'aéronef, une zone adéquate est définie sur laquelle le point d'accrochage $G_0$ est automatiquement choisi par un traitement d'image qui recherche un point contrasté sur cette zone et vérifie éventuellement la présence d'autres points $G_1$, $G_2$, ..., dans le voisinage.

Les défauts mesurés sont éventuellement comparés à l'historique des évaluations précédentes et une correction courante est évaluée. La correction est appliquée sur les mesures suivantes de l'instrument de mesure obtenues par exemple en dehors de ce procédé de calibrage.

Sur un système terrestre comme par exemple une caméra portable, on peut grâce au procédé localiser une cible au moyen d'un compas magnétique et d'un télémètre sans devoir estimer la déclinaison magnétique locale. Pour ce faire, on vise un point du sol caractéristique $G_0$ sur lequel on réalise deux jeux de mesures depuis deux positions différentes $P_1$, $P_2$ en déplaçant la caméra. Ces positions sont par exemple fournies par un système de positionnement tel qu'un GPS. Dans ce cas le dispositif d'acquisition d'images n'enregistre pas nécessairement lesdites images. Sous cette forme la correction permet d'évaluer la déclinaison locale et d'exploiter l'information en vue de localiser d'autres points de la scène $G_1$, $G_2$, ..., sur une large zone autour de laquelle a eu lieu le calibrage.

On a représenté figure 2 un exemple de système optronique équipé de moyens de calibrage d'un instrument de mesure.

Il comprend :

- un dispositif 10 d'acquisition d'images d'une scène comprenant un objet fixe $G_0$ ; ce dispositif d'acquisition d'images n'enregistre pas nécessairement lesdites images ;
- des moyens 15 manuels ou automatiques de poursuite de l'objet fixe $G_0$ au cours de l'acquisition de ces images ;
- au moins un instrument de mesure de la distance 25 et/ou un instrument de mesure d'angles d'orientation et/ou d'attitude 30 entre cet instrument de mesure et l'objet fixe $G_0$, selon une ligne de visée LdV. Cet instrument est à calibrer ;
- des moyens de positionnement 20 apte à fournir les positions $P_1$, $P_2$, ...$P_i$, ..., $P_j$, ... du système,
- un dispositif 41 de rectification et synchronisation des mesures avec ces positions. La rectification consiste en particulier à appliquer les corrections estimées par le processus de calibrage,
- une unité de calcul 40 apte à estimer les défauts de mesure qui minimisent la dispersion d'au moins deux points d'intersection Gij entre la LdV à la position Pi et la LdV à la position Pj, en fonction desdites mesures et des positions Pi, Pj du système et apte à appliquer les défauts estimés aux mesures.

**Revendications**

1. Procédé de calibrage d'instruments de mesure d'un système optronique en mouvement, de positions $P_1$, $P_2$, ..., $P_i$, ..., ce système optronique comprenant :

    - un dispositif d'acquisition (10) d'images d'une scène comprenant un objet fixe $G_0$ et,
    - des moyens de poursuite (15) de l'objet fixe $G_0$ au cours de l'acquisition de ces images,
    - des moyens d'obtention des positions (20) $P_1$, $P_2$, ...
    - au moins un instrument de mesure de la distance (25) et/ou un instrument de mesure d'angles d'orientation et/ou d'attitude (30) entre cet instrument de mesure et l'objet fixe $G_0$, selon une ligne de visée LdV,
    qui comprend une étape d'acquisition à des instants $t_1$, $t_2$, ... d'au moins deux images, chaque image étant acquise à partir de positions différentes $P_1$, $P_2$, ... du système, l'objet fixe $G_0$ étant visé dans chaque image, mais sa position étant inconnue,

    **caractérisé en ce qu'**il comprend les étapes suivantes :

    - acquisition aux instants $t'_1$, $t'_2$, ... de mesures par le ou les instruments de mesure,
    - synchronisation de ces mesures avec les positions $P_1$, $P_2$, ... établies à des instants $t_1$, $t_2$, ...,
    - estimation des défauts de mesure qui minimisent la dispersion d'au moins deux points d'intersection $G_{ij}$ entre la LdV à la position $P_i$ et la LdV à la position $P_j$, en fonction desdites mesures et des positions connues $P_i$, $P_j$ du système.

2. Procédé de calibrage selon la revendication précédente, **caractérisé en ce que** $G_0$ est au centre des images.

3. Procédé de calibrage selon l'une des revendications précédentes, **caractérisé en ce que** le seul instrument de mesure calibré est un instrument de mesure d'angles d'orientation, et **en ce que** les mesures sont acquises à partir d'au moins trois positions $P_1$, $P_2$, $P_3$ différentes.

4. Procédé de calibrage selon l'une des revendications 1 à 2, **caractérisé en ce que** le seul instrument de mesure calibré est un instrument de mesure d'attitude, et **en ce que** les mesures sont acquises à partir d'au moins trois positions $P_1$, $P_2$, $P_3$ différentes.

5. Procédé de calibrage selon l'une des revendications précédentes, **caractérisé en ce que** le seul instrument de mesure calibré est un télémètre, et **en ce que** les mesures sont acquises à partir d'au moins deux positions différentes.

**6.** Procédé de calibrage selon l'une des revendications précédentes, **caractérisé en ce qu'**au moins un autre objet fixe $G_1$ étant visible sur au moins deux images, il comprend en outre une étape de mise en correspondance dans chaque image des objets fixes $G_0$, $G_1$, l'étape de calcul des défauts de mesure étant en outre réalisée en fonction de caractéristiques prédéterminées internes au dispositif d'acquisition des images.

**7.** Procédé de calibrage selon l'une des revendications précédentes, **caractérisé en ce qu'**il comprend une étape d'optimisation des conditions de mesure basée sur la détermination d'une trajectoire optimale du capteur pour une position connue de l'objet $G_0$, ou sur la détermination d'une zone à privilégier pour la recherche de l'objet $G_0$.

**8.** Procédé de calibrage selon l'une des revendications précédentes, **caractérisé en ce qu'**il comprend une étape de calcul de la position géographique de $G_0$ et éventuellement des autres objets fixes, à partir des mesures calibrées.

**9.** Procédé de calibrage selon l'une des revendications 1 à 6, **caractérisé en ce qu'**il comprend une étape de pointage de l'objet fixe $G_0$.

**10.** Procédé de calibrage selon l'une des revendications précédentes, **caractérisé en ce qu'**il comprend en outre l'étape suivante consistant à appliquer les défauts estimés à l'instrument de mesure (25, 30) ou aux instruments de mesure, afin de bénéficier de mesures corrigées.

**11.** Système optronique apte à être déplacé, qui comprend :

- un dispositif d'acquisition d'images (10) d'une scène comprenant un objet fixe $G_0$ et,
- des moyens de poursuite (15) de l'objet fixe $G_0$ au cours de l'acquisition de ces images,
- des moyens d'obtention des positions (20) $P_1$, $P_2$, ...
- au moins un instrument de mesure de la distance (25) et/ou un instrument de mesure d'angles d'orientation et/ou d'attitude (30) entre cet instrument de mesure et l'objet fixe S0, selon une ligne de visée LdV, **caractérisé en ce qu'**il comprend des moyens (40) de mise en oeuvre du procédé de calibrage dudit, ou desdit, instruments de mesure selon l'une des revendications précédentes.

**Patentansprüche**

**1.** Verfahren zum Kalibrieren von Messinstrumenten eines in Bewegung befindlichen optronischen Systems von Positionen $P_1$, $P_2$, ..., $P_i$, ..., wobei das optronische System Folgendes umfasst:

- eine Vorrichtung (10) zum Erfassen von Bildern einer Szene, die ein festes Objekt $G_0$ umfasst; und
- Mittel (15) zum Verfolgen des festen Objekts $G_0$ beim Erfassen dieser Bilder;
- Mittel (20) zum Einholen der Positionen $P_1$, $P_2$, ...;
- wenigstens ein Instrument (25) zum Messen der Entfernung und/oder ein Instrument (30) zum Messen von Orientierungs- und/oder Lagewinkeln zwischen diesem Messinstrument und dem festen Objekt $G_0$ entlang einer Sichtlinie LdV,
das einen Schritt des Erfassens von wenigstens zwei Bildern zu den Zeitpunkten $t_1$, $t_2$, ... beinhaltet, wobei jedes Bild von unterschiedlichen Positionen $P_1$, $P_2$, ... des Systems erfasst wird, wobei das feste Objekt $G_0$ in jedem Bild gesichtet wird, aber seine Position unbekannt ist,

**dadurch gekennzeichnet, dass** es die folgenden Schritte beinhaltet:

- Erfassen, zu den Zeitpunkten $t'_1$, $t'_2$, ..., von Messwerten mit den ein oder mehreren Messinstrumenten;
- Synchronisieren dieser Messwerte mit den zu den Zeitpunkten $t_1$, $t_2$, ... festgelegten Positionen $P_1$, $P_2$, ...;
- Schätzen von Messfehlern, die die Dispersion von wenigstens zwei Schnittpunkten $G_{ij}$ zwischen der LdV an der Position $P_i$ und der LdV an der Position $P_j$ in Abhängigkeit von den Messwerten und bekannten Positionen $P_i$, $P_j$ des Systems minimieren.

**2.** Kalibrationsverfahren nach dem vorherigen Anspruch, **dadurch gekennzeichnet, dass** $G_0$ in der Mitte der Bilder liegt.

**3.** Kalibrationsverfahren nach einem der vorherigen Ansprüche, **dadurch gekennzeichnet, dass** das einzige kalibrierte Messinstrument ein Instrument zum Messen von Orientierungswinkeln ist, und dadurch, dass die Messwerte von wenigstens drei unterschiedlichen Positionen $P_1$, $P_2$, $P_3$ erfasst werden.

4. Kalibrationsverfahren nach einem der Ansprüche 1 bis 2, **dadurch gekennzeichnet, dass** das einzige kalibrierte Messinstrument ein Instrument zum Messen der Lage ist, und dadurch, dass die Messwerte von wenigstens drei unterschiedlichen Positionen $P_1$, $P_2$, $P_3$ erfasst werden.

5. Kalibrationsverfahren nach einem der vorherigen Ansprüche, **dadurch gekennzeichnet, dass** das einzige kalibrierte Messinstrument ein Entfernungsmesser ist, und dadurch, dass die Messwerte von wenigstens zwei verschiedenen Positionen erfasst werden.

6. Kalibrationsverfahren nach einem der vorherigen Ansprüche, **dadurch gekennzeichnet, dass** es, wenn wenigstens ein anderes festes Objekt $G_1$ auf wenigstens zwei Bildern sichtbar ist, ferner einen Schritt des Abgleichens von festen Objekten $G_0$, $G_1$ in jedem Bild beinhaltet, wobei der Schritt des Berechnens von Messfehlern auch in Abhängigkeit von vorbestimmten Charakteristiken in der Bilderfassungsvorrichtung durchgeführt wird.

7. Kalibrationsverfahren nach einem der vorherigen Ansprüche, **dadurch gekennzeichnet, dass** es einen Schritt des Optimierens von Messbedingungen auf der Basis der Ermittlung einer optimalen Bahn des Sensors für eine bekannte Position des Objekts $G_0$ oder auf der Basis der Ermittlung einer für die Suche des Objekts $G_0$ zu favorisierenden Zone beinhaltet.

8. Kalibrationsverfahren nach einem der vorherigen Ansprüche, **dadurch gekennzeichnet, dass** es einen Schritt des Berechnens der geografischen Position von $G_0$ und eventuell anderer fester Objekte auf der Basis von kalibrierten Messungen beinhaltet.

9. Kalibrationsverfahren nach einem der Ansprüche 1 bis 6, **dadurch gekennzeichnet, dass** es einen Schritt des Ausrichtens des festen Objekts $G_0$ beinhaltet.

10. Kalibrationsverfahren nach einem der vorherigen Ansprüche, **dadurch gekennzeichnet, dass** es ferner den Schritt des Anwendens der geschätzten Fehler auf das oder die Messinstrument(e) (25, 30) beinhaltet, um korrigierte Messwerte zu nutzen.

11. Optronisches System, das bewegt werden kann und Folgendes umfasst:

   - eine Vorrichtung (10) zum Erfassen von Bildern einer Szene, die ein festes Objekt $G_0$ umfasst; und
   - Mittel (25) zum Verfolgen des festen Objekts $G_0$ beim Erfassen dieser Bilder;
   - Mittel (20) zum Einholen von Positionen $P_1$, $P_2$, ...;
   - wenigstens ein Instrument (25) zum Messen der Entfernung und/oder ein Instrument (30) zum Messen von Orientierungs- und/oder Lagewinkeln zwischen diesem Messinstrument und dem festen Objekt S0 entlang einer Sichtlinie LdV (LoS),
   **dadurch gekennzeichnet, dass** es Mittel (40) zum Implementieren des Verfahrens zum Kalibrieren der ein oder mehreren Messinstrumente nach einem beliebigen der vorherigen Ansprüche umfasst.

## Claims

1. A method for calibrating measurement instruments of an optronic system in motion, from positions $P_1$, $P_2$, ..., $P_i$, ..., said optronic system comprising:

   - a device (10) for acquiring images of a scene comprising a fixed object $G_0$;
   and
   - means (15) for tracking said fixed object $G_0$ when acquiring said images;
   - means (20) for obtaining positions $P_1$, $P_2$, ...;
   - at least one instrument (25) for measuring the distance and/or one instrument (30) for measuring angles of orientation and/or attitude between this measurement instrument and said fixed object $G_0$ along a line of sight LdV (LoS),
   comprising a step of acquiring at least two images at instants $t_1$, $t_2$, ..., each image being acquired from different positions $P_1$, $P_2$, ... of said system, with said fixed object $G_0$ being sighted in each image but its position being unknown,

**characterised in that** it comprises the following steps:

- acquiring, at the instants $t'_1$, $t'_2$, ..., measurements via the one or more measurement instruments;
- synchronising said measurements with the positions $P_1$, $P_2$, ... established at instants $t_1$, $t_2$, ...;
- estimating measurement errors that minimise the dispersion of at least two points of intersection $G_{ij}$ between the LoS at the position $P_i$ and the LoS at the position $P_j$, as a function of said measurements and of the known positions $P_i$, $P_j$ of said system.

2. The calibration method according to the preceding claim, **characterised in that** $G_0$ is at the centre of said images.

3. The calibration method according to any one of the preceding claims, **characterised in that** the only calibrated measurement instrument is an instrument for measuring angles of orientation, and **in that** the measurements are acquired from at least three different positions $P_1$, $P_2$, $P_3$.

4. The calibration method according to any one of claims 1 to 2, **characterised in that** the only calibrated measurement instrument is an instrument for measuring attitude, and **in that** the measurements are acquired from at least three different positions $P_1$, $P_2$, $P_3$.

5. The calibration method according to any one of the preceding claims, **characterised in that** the only calibrated measurement instrument is a range finder, and **in that** the measurements are acquired from at least two different positions.

6. The calibration method according to any one of the preceding claims, **characterised in that**, with at least one other fixed object $G_1$ being visible on at least two images, it further comprises a step of matching fixed objects $G_0$, $G_1$ in each image, with the step of computing measurement errors also being carried out as a function of predetermined characteristics within said image acquisition device.

7. The calibration method according to any one of the preceding claims, **characterised in that** it comprises a step of optimising measurement conditions based on determining an optimal trajectory of the sensor for a known position of said object $G_0$ or on determining a zone to be favoured for finding said object $G_0$.

8. The calibration method according to any one of the preceding claims, **characterised in that** it comprises a step of computing the geographical position of $G_0$ and possibly of other fixed objects on the basis of calibrated measurements.

9. The calibration method according to any one of claims 1 to 6, **characterised in that** it comprises a step of pointing at said fixed object $G_0$.

10. The calibration method according to any one of the preceding claims, **characterised in that** it further comprises the following step that involves applying the estimated errors to one or more of said measurement instruments (25, 30) in order to take advantage of corrected measurements.

11. An optronic system capable of being displaced, comprising:

- a device (10) for acquiring images of a scene comprising a fixed object $G_0$; and
- means (15) for tracking said fixed object $G_0$ when acquiring said images;
- means (20) for obtaining positions $P_1$, $P_2$, ...;
- at least one instrument (25) for measuring the distance and/or one instrument (30) for measuring angles of orientation and/or attitude between this measurement instrument and the fixed object S0 along a line of sight LdV (LoS), **characterised in that** it comprises means (40) for implementing the method for calibrating the one or more measurement instruments according to any one of the preceding claims.

FIG.1

FIG.2

FIG.3

FIG.4

$$(\tau_x, \tau_y, \tau_z, \varepsilon_x, \varepsilon_y, \varepsilon_z, x_1, y_1, z_1, \psi_1, \theta_1, \varphi_1)^T$$

$$(\tau_x, \tau_y, \tau_z, \varepsilon_x, \varepsilon_y, \varepsilon_z, x_2, y_2, z_2, \psi_2, \theta_2, \varphi_2)^T$$

$$(\tau_x, \tau_y, \tau_z, \varepsilon_x, \varepsilon_y, \varepsilon_z, x_3, y_3, z_3, \psi_3, \theta_3, \varphi_3)^T$$

$P_1$   $PPI_1$ :   $(p_{01}, q_{01})$   $(p_{31}, q_{31})$

$PPI_2$ :   $(p_{02}, q_{02})$   $P_2$   $(p_{32}, q_{32})$   $PPI_3$ :   $(p_{33}, q_{33})$

$(p_{03}, q_{03})$   $P_3$

Image 1   $(p_{21}, q_{21})$

Image 2   $(p_{22}, q_{22})$   Image 3

$(p_{11}, q_{11})$   $(p_{12}, q_{12})$   $(p_{23}, q_{23})$

$\rho_1$   $\rho_2$   $\rho_3$

$(p_{13}, q_{13})$

$G_3$   $G_0$   $G_2$

$G_1$

FIG.5

FIG.6

Objet positionné
(avec biais)

$\Delta\rho_1$

$\mathbf{G_b}$

Objet positionné
(sans biais)

Direction mesurée
Mesure réelle (biaisée)

$\rho_1$

$\Delta\rho_2$

$\psi_1$

$\delta\psi_1$

**G**

$P_1$
trajectoire

Direction poursuivie
Mesure idéale

$\rho_2$

Objet accroché

$\psi_2$

$\Delta\psi_2$

$P_2$

# FIG.7a

Objet positionné
(avec biais)

Direction mesurée
Mesure réelle (biaisée)

$\mathbf{G_b}$

Objet positionné
(sans biais)

$\psi_1$

$\delta\psi_1$

**G**

$P_1$
trajectoire

Direction poursuivie
Mesure idéale

Objet accroché

$\psi_2$

$\delta\psi_2$

$P_2$

# FIG.7b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2005114567 A

**Littérature non-brevet citée dans la description**

- **P. RENAUD.** Optimal pose selection for vision-based kinematic calibration of parallel mechanisms. *Proceedings of the 2003 IEE/RSJ. Conference on Intelligent Robots and Systems,* Octobre 2003
- Air Reconnaissance Primary Imagery Data Standard. 14 Mars 2006
- **T. SIELHORST T.** Advanced Medical Displays- A Literature Review of Augmented Reality. *J. of Display technology,* Décembre 2008, vol. 4 (4
- **MANGEL.** Three bearing method for passive triangulation in systems with unknown deterministic biases. *IEEE TAES,* Novembre 1981, vol. 7 (6
- **PITTELKAU.** Calibration and Attitude Determination with Redundant Inertial Measurement Units. *J. of Guidance Control and Dynamics,* Juillet 2005, vol. 28 (4
- A real-time bias registration algorithm for multiradar systems. **LI.** 7th International Conférence on Signal Processing. IEEE, 2004
- **DONG.** A generalized least squares registration algorithm with Earth-centered Earth-fixed (ECEF) coordinate system. *3d International Conférence on Computational Electromagnetics and Its Applications Proceedings,* 2004